# EUROPEAN PATENT APPLICATION

(11) **EP 4 823 023 A1**
(43) Date of publication of application: **14.10.2026**
(21) Application number: 23960585.0
(22) Date of filing: 08.12.2023
(51) Int. Cl.: H04L 5/00

(54) **DATA TRANSMISSION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: XIAO, Han, Dongguan, Guangdong 523860 (CN)
(74) Representative: RGTH
(86) International application number: PCT/CN2023/137459
(87) International publication number: WO 2025/118274

(57) **Abstract**

Provided in the present application are a data transmission method and a communication device. The method comprises: a first device sending a target data signal to a second device, wherein the target data signal is generated on the basis of first data signals and second data signals, transmission resources occupied by the first data signals comprise first resources, the first resources are further used for transmitting some or all of the data signals among the second data signals, and the first resources comprise at least two of the following resources: a time-domain resource, a frequency-domain resource and a space-domain resource.

## Description

### TECHNICAL FIELD

The present disclosure relates to the communication technology field, and more particularly, to a data transmission method and a communication device.

### BACKGROUND

In order to improve the data transmission efficiency, the current data signal may be transmitted by time division multiplexing or frequency division multiplexing, but this method still has the problem of low transmission resource utilization rate.

### SUMMARY

The present disclosure provides a data transmission method and a communication device. Several aspects involved in the embodiments of the present disclosure are introduced below.

A first aspect provides a data transmission method, including: sending, by a first device, a target data signal to a second device, where the target data signal is generated based on a first data signal and a second data signal, a transmission resource occupied by the first data signal includes a first resource, the first resource is also used for transmitting part or all of data signals in the second data signal, and the first resource includes at least two of resources as follows: a time-domain resource, a frequency-domain resource, and a spatial-domain resource.

A second aspect provides a data transmission method, including: receiving, by a second device, a target data signal sent from a first device, where the target data signal is generated based on a first data signal and a second data signal, a transmission resource occupied by the first data signal includes a first resource, the first resource is also used for transmitting part or all of data signals in the second data signal, and the first resource includes at least two of resources as follows: a time-domain resource, a frequency-domain resource, and a spatial-domain resource.

A third aspect provides a communication device, where the communication device is a first device, including: a sending unit, configured to send a target data signal to a second device, where the target data signal is generated based on a first data signal and a second data signal, a transmission resource occupied by the first data signal includes a first resource, the first resource is also used for transmitting part or all of data signals in the second data signal, and the first resource includes at least two of resources as follows: a time-domain resource, a frequency-domain resource, and a spatial-domain resource.

A fourth aspect provides a communication device, where the communication device is a second device, including: a receiving unit, configured to receive a target data signal sent from a first device, where the target data signal is generated based on a first data signal and a second data signal, a transmission resource occupied by the first data signal includes a first resource, the first resource is also used for transmitting part or all of data signals in the second data signal, and the first resource includes at least two of resources as follows: a time-domain resource, a frequency-domain resource, and a spatial-domain resource.

A fifth aspect provides a communication device, including a memory, a processor, and a transceiver, where the memory is configured to store a program; the processor is configured to invoke the program in the memory; and the transceiver is configured to: send a target data signal to a second device, where the target data signal is generated based on a first data signal and a second data signal, a transmission resource occupied by the first data signal includes a first resource, the first resource is also used for transmitting part or all of data signals in the second data signal, and the first resource includes at least two of resources as follows: a time-domain resource, a frequency-domain resource, and a spatial-domain resource.

A sixth aspect provides a communication device, including a memory, a processor, and a transceiver, where the memory is configured to store a program; the processor is configured to invoke the program in the memory; and the transceiver is configured to: receive a target data signal sent from a first device, where the target data signal is generated based on a first data signal and a second data signal, a transmission resource occupied by the first data signal includes a first resource, the first resource is also used for transmitting part or all of data signals in the second data signal, and the first resource includes at least two of resources as follows: a time-domain resource, a frequency-domain resource, and a spatial-domain resource.

A seventh aspect provides an apparatus, including a processor, configured to invoke a program from a memory to perform the method according to the first aspect.

An eighth aspect provides an apparatus, including a processor, configured to invoke a program from a memory to perform the method according to the second aspect.

A ninth aspect provides a chip, including a processor, configured to invoke a program from a memory, to enable a device in which the chip is installed to perform the method according to the first aspect.

A tenth aspect provides a chip, including a processor, configured to invoke a program from a memory, to enable a device in which the chip is installed to perform the method according to the second aspect.

An eleventh aspect provides a computer-readable storage medium, where a program is stored thereon, and the program enables a computer to perform the method according to the first aspect.

A twelfth aspect provides a computer-readable storage medium, where a program is stored thereon, and the program enables a computer to perform the method according to the second aspect.

A thirteenth aspect provides a computer program product, including a program, where the program enables a computer to perform the method according to the first aspect.

A fourteenth aspect provides a computer program product, including a program, where the program enables a computer to perform the method according to the second aspect.

A fifteenth aspect provides a computer program, where the computer program enables a computer to perform the method according to the first aspect.

A sixteenth aspect provides a computer program, where the computer program enables a computer to perform the method according to the second aspect.

The first data signal and the second data signal in the present disclosure may be transmitted on the same first resource (for example, a non-orthogonal transmission), or in other words, at least two resources among a time-domain resource, a frequency-domain resource, and a spatial-domain resource occupied by the first data signal and the second data signal may be overlapped. In a traditional transmission method, only one resource among the time-domain resource, the frequency-domain resource, and the spatial-domain resource occupied by the first data signal and the second data signal may be the same, therefore, compared to the transmission scheme of time division multiplexing and frequency division multiplexing, the scheme of the present disclosure may improve the utilization rate of transmission resources.

### BRIEF DESCRIPTION OF THE DRAWINGS

FIG. 1 is a wireless communication system 100 to which the embodiments of the present disclosure are applied.
FIG. 2 is a schematic diagram of channel estimation and signal recovery to which the embodiments of the present disclosure are applicable.
FIG. 3(a) to FIG. 3(c) illustrate patterns of data symbols and pilot symbols under different configurations.
FIG. 4 illustrates a neural network model to which the embodiments of the present disclosure are applicable.
FIG. 5 illustrates a neural network model to which the embodiments of the present disclosure are applicable.
FIG. 6 illustrates a convolutional neural network to which the embodiments of the present disclosure are applicable.
FIG. 7 illustrates a long short-term memory (LSTM) model to which the embodiments of the present disclosure are applicable.
FIG. 8 illustrates a process of channel estimation based on a channel estimation module.
FIG. 9 is a wireless communication system 900 to which the embodiments of the present disclosure are applicable.
FIG. 10 is a schematic flowchart of a data transmission method provided in the embodiments of the present disclosure.
FIG. 11 is a schematic diagram of adjusting modulation constellation points associated with a data signal in the embodiments of the present disclosure.
FIG. 12 illustrates a scheme for transmitting the first data signal and the second data signal based on a linear superposition provided in the embodiments of the present disclosure.
FIG. 13 to FIG. 25 illustrate schemes for the first data signal and the second data signal based on a nonlinear superposition provided in the embodiments of the present disclosure.
FIG. 26 illustrates a structure of a first receiver in a second device.
FIG. 27 is a schematic diagram for recovering the first data signal and the second data signal provided in the embodiments of the present disclosure.
FIG. 28 is another schematic diagram for recovering the first data signal and the second data signal provided in the embodiments of the present disclosure.
FIG. 29 is a schematic block diagram of a communication device provided in the embodiments of the present disclosure.
FIG. 30 is a schematic block diagram of another communication device provided in the embodiments of the present disclosure.
FIG. 31 is a structural schematic diagram of a communication apparatus provided in the embodiments of the present disclosure.

### DETAILED DESCRIPTION

The technical solutions in the present disclosure will be described below in conjunction with the drawings.

### I. signal transmission process in a wireless communication system

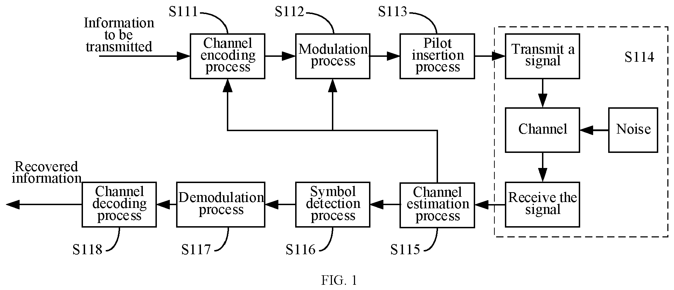

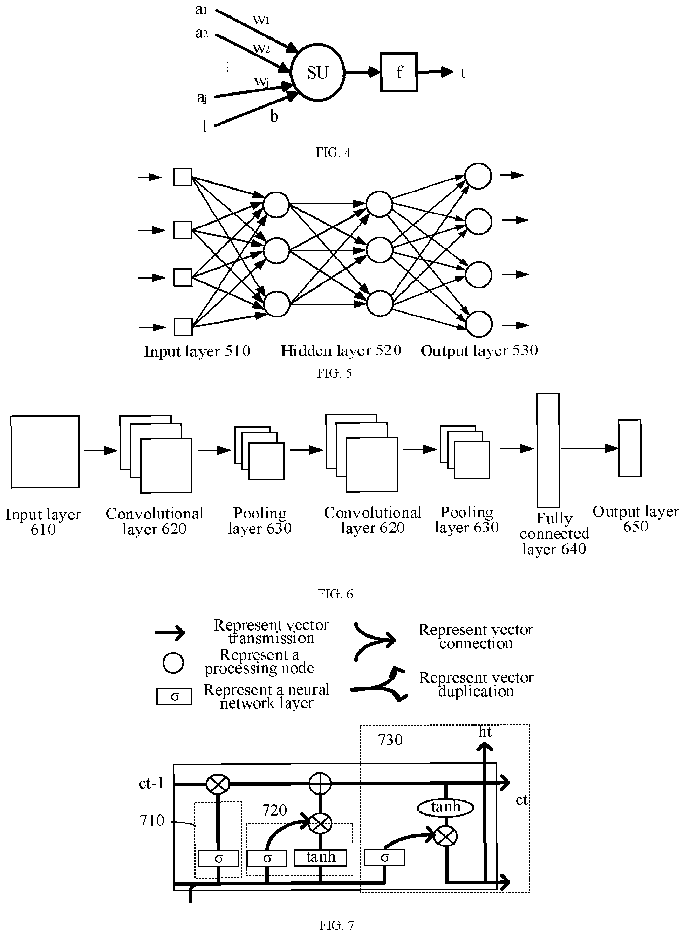

FIG. 1 is a flowchart of signal transmission in a wireless communication system to which the embodiments of the present disclosure are applicable. As shown in FIG. 1, the signal transmission process in the wireless communication system may be roughly divided into multiple signal processing processes S111 to S118 as shown in FIG. 1. Part or all of the signal processing processes shown in FIG. 1 may be implemented through separate AI (artificial intelligence) models, and specific implementations thereof may refer to introductions of FIG. 5 to FIG. 8.

In the channel encoding process S111, a transmitter performs channel encoding on information to be transmitted, to obtain an encoded bitstream. The information to be transmitted may be in the form of a bit stream.

In the modulation process S112, the bitstream is modulated into a modulation symbol.

In the pilot insertion process S113, a pilot symbol is inserted into the above modulation symbol to form a signal to be transmitted, where the pilot symbol may be used by a receiver for channel estimation and symbol detection.

In the signal transmission S114, the above signal is carried on a channel and transmitted to the receiver. Noise is usually superposed on the signal in the transmission process through the channel.

In the channel estimation process S115, the receiver may perform channel estimation based on the pilot signal to obtain channel state information (channel state information-reference signal, CSI), and feed back the CSI to the transmitter via a feedback link, for the transmitter to adjust channel encoding, modulation, precoding, and so on.

In the symbol detection process S116, symbol detection is performed on the received modulation symbol to obtain a detection result.

In the demodulation process S117, the received modulation symbol is demodulated based on the detection result to obtain a bitstream.

In the channel decoding process S118, the bitstream is decoded to obtain recovered information, where the recovered information may be in the form of a bit stream.

It should be understood that the signal processing processes S111 to S118 shown in FIG. 1 only exemplarily list common signal processing processes in the wireless communication system, and the wireless communication system may further include signal processing processes such as resource mapping, precoding, interference cancellation, CSI measurement, etc., and these signal processing processes may also be implemented through separate AI models. For brevity, these will not be repeated in the present disclosure.

### II. channel estimation

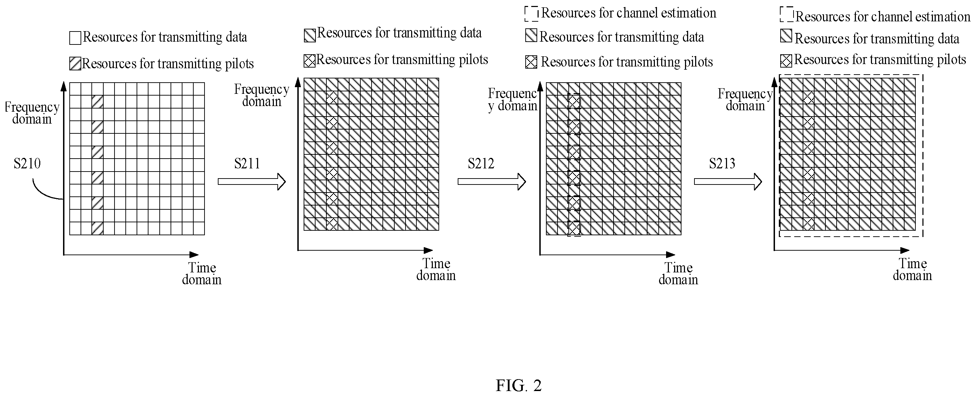

Due to the complexity and time-varying nature of the wireless channel environment, in a wireless communication system (for example, the wireless communication system introduced above), a receiver needs to recover a received signal based on an estimation result of a channel. FIG. 2 is a schematic diagram of channel estimation and signal recovery to which the embodiments of the present disclosure are applicable.

As shown in FIG. 2, in step S210, the transmitter transmits, on a time-frequency resource, not only data signals, but also a series of pilot signals known to the receiver, such as a channel state information-reference signal (CSI-RS), a demodulation reference signal (DMRS), and the like.

In step S211, the transmitter transmits the above data signals and pilot signals to the transmitter via a channel.

The time-frequency resource occupied by the pilot signal is different from the time-frequency resource occupied by the data signal.

In step S212, the receiver may perform channel estimation after receiving the pilot signals. In a possible implementation, the receiver may estimate channel information of the channel for transmitting the pilot signals through a channel estimation algorithm (for example, a least squares method (LS) channel estimation), based on pre-stored pilot signals and received pilot signals.

In step S213, based on the channel information of the channel for transmitting the pilot sequence, the receiver may use an interpolation algorithm to recover channel information over full time-frequency resources, for subsequent CSI feedback or data recovery, etc.

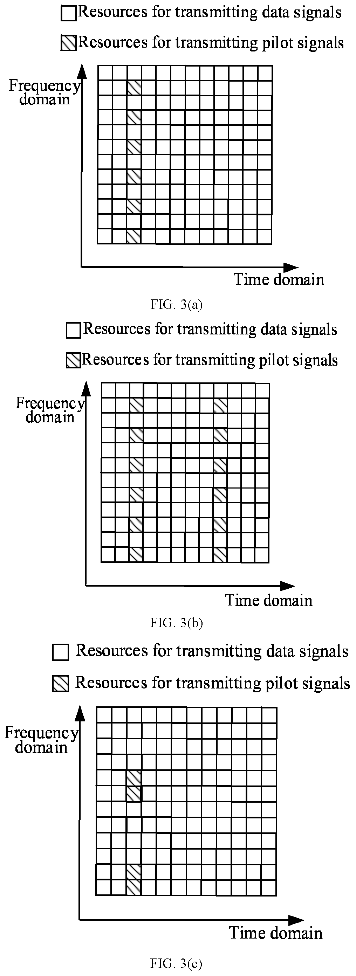

Based on the above introduction with reference to FIG. 2, it may be known that the time-frequency resources for transmitting pilot signals are different from the time-frequency resources for transmitting data signals. In addition, it is specified in some communication protocols (for example, an NR communication protocol) that symbols used for transmitting pilot signals (hereinafter referred to as "pilot symbols") are different from symbols used for transmitting data signals (hereinafter also referred to as "data symbols"). FIG. 3(a) to FIG. 3(c) illustrate patterns of data symbols and pilot symbols under different configurations.

Referring to FIG. 3(a), in a resource block (RB), pilot symbols are distributed with a spacing of one symbol among multiple resource elements (REs) corresponding to a symbol 2 in the RB. Referring to FIG. 3(b), in an RB, pilot symbols occupy part of multiple symbols corresponding to a symbol 2 and a symbol 10 in the RB. Referring to FIG. 3(c), in an RB, pilot symbols occupy multiple groups of REs in a symbol 2 in the RB, where each group of REs includes two REs consecutive in the frequency domain.

Generally, in the patterns shown in FIG. 3(a) to FIG. 3(c), different patterns may be adapted to different communication environments. In some implementations, when a moving speed of the terminal device is high and the time-varying of the channel characteristic is fast, a pattern with a denser distribution of pilot symbols may be selected, which helps improve the accuracy of channel quality estimation for the entire RB. For example, the pattern shown in FIG. 3(b) may be selected.

In other implementations, when a moving speed of the terminal device is slow and the time-varying of the channel characteristic is slow, a pattern with a sparser distribution of pilot symbols may be selected, which helps reduce the overhead caused by transmitting pilot signals while ensuring the accuracy of channel quality estimation for the entire RB.

### III. neural network

In recent years, the artificial intelligence research represented by neural networks has achieved significant results in many fields, and will also play an important role in people's production and life for a long time to come. A neural network may be understood as a computational model composed of multiple neuron nodes connected to each other, where a connection between nodes may represent a weight value from an input signal to an output signal, often referred to as a parameter. Each node performs a weighted summation on different input signals and outputs through a specific activation function.

Referring to FIG. 4, a neuron may rely on an activation function to achieve nonlinear mapping, where an input of the neuron may be denoted as A, each dimension of the input is denoted as aⱼ, a corresponding parameter is denoted as wⱼ, which strengthens or weakens the input together with a summation unit (SU). In addition, an output of the SU may be input to an activation function f to obtain an output t, where j takes values of 1, 2, ..., n.

Common neural networks include a convolutional neural network (CNN), a recurrent neural network (RNN), a deep neural network (DNN), etc.

A neural network to which the embodiments of the present disclosure are applicable is introduced below in conjunction with FIG. 5. The neural network shown in FIG. 5 may be divided into three types according to positions of different layers: an input layer 510, a hidden layer 520, and an output layer 530. Generally, a first layer is the input layer 510, a last layer is the output layer 530, and intermediate layers between the first layer and the last layer are all hidden layers 520.

The input layer 510 is used to input data, where the input data may be, for example, a received signal received by the receiver. The hidden layer 520 is used to process the input data, for example, to perform decompression processing on the received signal. The output layer 530 is used to output processed output data, for example, to output a decompressed signal.

As shown in FIG. 5, the neural network includes multiple layers, each layer includes multiple neurons, and a neuron between layers may be fully connected or partially connected. For connected neurons, an output of a neuron in a previous layer may be an input of a neuron in a next layer.

With the continuous development of the neural network research, neural network deep learning algorithms have been proposed in recent years, which introduce many hidden layers into the neural network to form a DNN, and more hidden layers enable the DNN to better depict complex situations in the real world. Theoretically, a model with more parameters has higher model complexity and greater "capacity", which means that it can complete more complex learning tasks. Such a neural network model is widely used in mode recognition, signal processing, combination optimization, abnormality detection, and other aspects.

The CNN is a deep neural network with a convolutional structure, and its structure is shown in FIG. 6, which may include an input layer 610, a convolutional layer 620, a pooling layer 630, a fully connected layer 640, and an output layer 650.

Each convolutional layer 620 may include many convolutional operators, which are also called kernels, whose function may be regarded as a filter that extracts specific information from the input signal, and the convolution operator may essentially be a parameter matrix, which is usually predefined.

Parameter values in these parameter matrices need to be obtained through a large amount of training in practical applications, and various parameter matrices formed by the parameter values obtained through training may extract information from the input signal, thereby helping the CNN perform correct predictions.

When the CNN has multiple convolutional layers, an initial convolutional layer often extracts more general features, the general features may also be referred to as low-level features; as the depth of the CNN increases, the features extracted by the later convolutional layers become more and more complex.

For the pooling layer 630, since it is often necessary to reduce the number of training parameters, a pooling layer often needs to be periodically introduced after the convolutional layer, for example, there may be a convolutional layer followed by a pooling layer as shown in FIG. 6, or there may be multiple convolutional layers followed by one or more pooling layers. In the signal processing process, the sole purpose of the pooling layer is to reduce the spatial size of the extracted information.

For the fully connected layer 640, after processing by the convolutional layer 620 and the pooling layer 630, the CNN is still insufficient to output the required output information. As described above, the convolutional layer 620 and the pooling layer 630 only extract features and reduce the parameters brought by the input data. However, in order to generate the final output information (for example, the bit stream of the original information transmitted by the transmitter), the CNN also needs to utilize the fully connected layer 640. Usually, the fully connected layer 640 may include multiple hidden layers, and parameters contained in the multiple hidden layers may be pre-trained according to relevant training data of a specific task type, and for example, the task type may include decoding data signals received by the receiver, or for another example, the task type may also include performing channel estimation based on pilot signals received by the receiver.

After the multiple hidden layers in the fully connected layer 640, that is, the last layer of the entire CNN is the output layer 650, which is used to output a result. Usually, the output layer 650 is set with a loss function (for example, a loss function similar to classification cross entropy), which is used to calculate a prediction error, or in other words, to evaluate the degree of a difference between a result output by the CNN model (also referred to as a prediction value) and an ideal result (also referred to as a true value).

In order to minimize the loss function, it is necessary to train the CNN model. In some implementations, a backpropagation algorithm (BP) may be used to train the CNN model. The training process of BP is composed of a forward propagation process and a backpropagation process. In the forward propagation process (as shown in FIG. 6, the propagation from 610 to 650 is forward propagation), the input data is input to the above-mentioned layers of the CNN model, processed layer by layer, and transmitted to the output layer. If the result output by the output layer differs greatly from the ideal result, then minimizing the above-mentioned loss function is taken as the optimization objective, and it turns to backpropagation (as shown in FIG. 6, the propagation from 650 to 610 is backpropagation), the partial derivative of the optimization objective with respect to the weight value of each neuron is calculated layer by layer, to form a gradient vector of the optimization objective with respect to the weight value vector, which is the basis for modifying the model parameters, and the training process of the CNN is completed during the parameter modification process. When the above-mentioned error reaches a desired value, the training process of the CNN ends.

It should be noted that the CNN shown in FIG. 6 is only an example of a convolutional neural network, and in specific applications, the convolutional neural network may also exist in the form of other network models, which are not limited in the embodiments of the present disclosure.

The purpose of the RNN is to process sequence data. In a traditional neural network model (for example, a CNN model), it is from the input layer to the hidden layer and then to the output layer, they are fully connected between layers, and the nodes of each layer are not connected. However, such an ordinary neural network is powerless for many problems. For example, if you want to predict what the next word in a sentence is, you generally need to use the previous words, because the words before and after in the sentence are not independent. The reason why RNNs are called recurrent neural networks is that the current output of a sequence is also related to the previous output. The specific manifestation is that the network memorizes the previous information and applies it to the calculation of the current output, that is, the nodes between the hidden layers are no longer unconnected but connected, and the input of the hidden layer includes not only the output of the input layer but also the output of the hidden layer at the previous moment. Theoretically, RNNs can process sequence data with any length.

The training for the RNN is the same as the training for the traditional ANN (artificial neural network). Similarly, the BP error backpropagation algorithm is used, but there is a difference. If the RNN is network-unfolded, then the parameters W, U, V are shared, whereas in the traditional neural network, they are not shared. And in using the gradient descent algorithm, the output of each step depends not only on the network at the current step, but also depends on the states of the several previous steps of the network. For example, when t=4, it is also necessary to propagate backward three steps, and the subsequent three steps all need to add various gradients. This learning algorithm is referred to as the back propagation through time (BPTT) algorithm.

Since the artificial neural network and the convolutional neural network already exist, why is a recurrent neural network still needed? The reason is simple, whether it is the convolutional neural network or the artificial neural network, their premise assumption is that the elements are independent of each other, and the input and output are also independent, such as a cat and a dog. However, in the real world, many elements are interconnected, for example, stock changes over time, and a person says: I like traveling, and the favorite place is Yunnan, and if there is an opportunity in the future, I must go to __. Here, for filling in the blank, people should all know that it is filled with "Yunnan". Because we infer it based on the context content, but it is quite difficult for the opportunity to achieve this step. Therefore, there is now the recurrent neural network, whose essence is: to have the ability to remember like humans. Therefore, its output depends on the current input and memory. To explain the RNN in a sentence, it is a unit structure that is reused.

Currently, in order to solve the gradient explosion or vanishing problem of the RNN, a transformation is performed on the basis of the RNN, to obtain a long short-term memory (LSTM) model. Referring to FIG. 7, LSTM introduces a new memory unit cₜ (which may also be referred to as "cell state"), which is used for linear cyclic information delivery, and at the same time, for outputting information to the external state hₜ of the hidden layer. At each time t, cₜ records historical information up to the current moment. Different from the RNN which only considers the recent state, the memory unit decides which states should be retained and which states should be forgotten, thereby solving the defect of the traditional RNN in long-term memory.

Continuing to refer to FIG. 7, in order to achieve the selection of the above states, the memory unit introduces a gate control mechanism to control the path of information delivery, and similar to a gate in a data circuit, "0" indicates closed and "1" indicates open. The memory unit includes a forget gate 710, an input gate 720, and an output gate 730. The forget gate is used to control how much information the memory unit cₜ₋₁ at the previous moment needs to forget, and the input gate is used to control how much information the candidate state $\hat{{c}_{t}}$ at the current moment needs to store, and the output gate is used to control how much information the memory unit cₜ at the current moment needs to output to the external state hₜ.

### IV. channel estimation based on an AI decoder

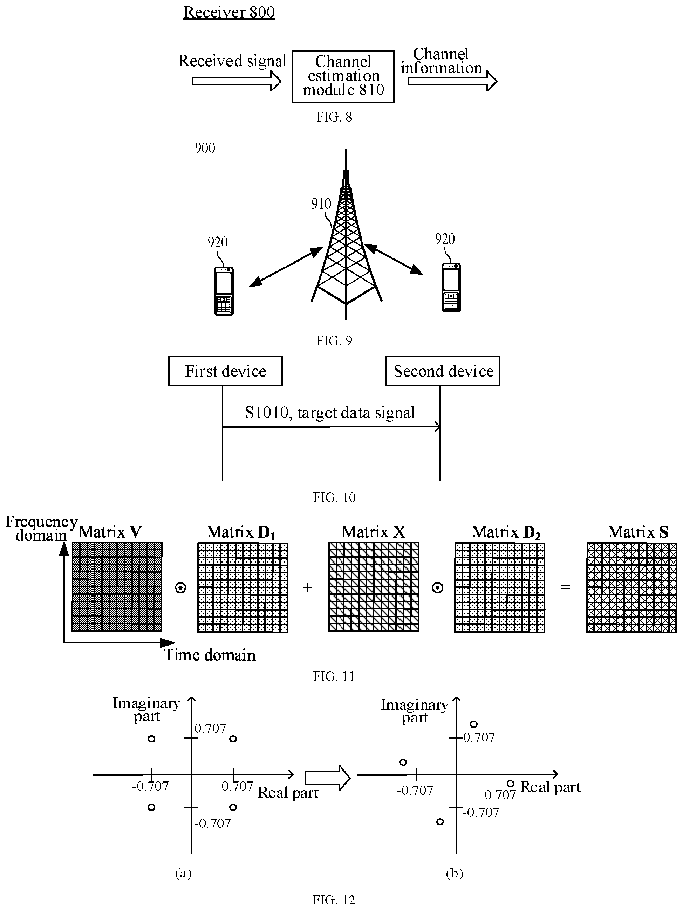

Channel estimation based on an AI decoder is intended to utilize an AI-based channel estimation module to process pilot signals received by the receiver, to achieve channel estimation. FIG. 8 illustrates a process of channel estimation based on a channel estimation module. Referring to FIG. 8, a signal (such as pilot signal) received by the receiver 800 is taken as the input of the channel estimation module 810, and correspondingly, the channel estimation module 810 processes the input pilot signal to output channel information. The input of the channel estimation module 810 is the received signal corresponding to a pilot symbol RE and the pilot symbol, and the output information is a result of the entire PRB (physical resource block) channel estimation.

In addition, in some implementations, other auxiliary information may be added in addition to the pilot signal, to improve the accuracy of the channel information output by the channel estimation module. For example, the channel estimation module 810 may also be input with an original sequence of pilot signals pre-stored by the receiver 800, an energy level of a pilot signal received by the receiver 800, a transmission delay when transmitting a pilot signal, or noise when transmitting a pilot signal, etc.

The internal implementation of the channel estimation module 810 may be a neural network such as DNN, CNN, etc., and of course, it may also be other neural networks, which are not specifically limited in the embodiments of the present disclosure.

The above describes the communication processes and terms involved in the embodiments of the present disclosure with reference to FIG. 1 to FIG. 8, and the below describes a communication system to which the embodiments of the present disclosure are applicable, with reference to FIG. 9.

FIG. 9 is a wireless communication system 900 to which the embodiments of the present disclosure are applicable. The wireless communication system 900 may include a network device 910. The network device 910 may be a device that communicates with terminal devices 920. The network device 910 may provide communication coverage for a specific geographical area, and may communicate with terminal devices 920 located within the coverage area.

FIG. 9 exemplarily illustrates one network device 910 and two terminal devices 920, and optionally, the wireless communication system 900 may include multiple network devices and the coverage range of each network device may include another number of terminal devices, which is not limited in the embodiments of the present disclosure.

Optionally, the wireless communication system 900 may also include other network entities such as a network controller, a mobility management entity, etc., which is not limited in the embodiments of the present disclosure.

Optionally, the terminal devices 920 may also communicate with each other directly, for example, two terminal devices 920 may communicate with each other via a device-to-device (D2D) link.

It should be noted that, in the following introduction, a first device and a second device are taken as an example for description. In some implementations, the first device may be the aforementioned network device 910, and correspondingly, the second device may be the aforementioned terminal device 920. In other implementations, the first device may be the aforementioned terminal device 920, and correspondingly, the second device may be the aforementioned network device 910. In other implementations, the first device may be the aforementioned terminal device 920, and correspondingly, the second device may be the aforementioned terminal device 920. It is not specifically limited in the embodiments of the present disclosure.

It should be understood that the technical solutions of the embodiments of the present disclosure may be applied to various communication systems, for example: a 5th generation (5G) system or new radio (NR), a long term evolution (LTE) system, an LTE frequency division duplex (FDD) system, LTE time division duplex (TDD), etc. The technical solutions provided in the present disclosure may also be applied to future communication systems, such as a sixth generation mobile communication system, or a satellite communication system, and so on.

The terminal device in the embodiments of the present disclosure may also be referred to as user equipment (UE), an access terminal, a user unit, a user station, a mobile platform, a mobile station (MS), a mobile terminal (MT), a remote station, a remote terminal, a mobile device, a user terminal, a terminal, a wireless communication device, a user agent, or a user apparatus. The terminal device in the embodiments of the present disclosure may refer to a device that provides voice and/or data connectivity to a user, and may be used to connect people, things, and machines, for example, a handheld device with a wireless connection function, a vehicle-mounted device, and the like. The terminal device in the embodiments of the present disclosure may be a mobile phone, a Pad, a laptop computer, a palmtop computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, and the like. Optionally, a UE may be used to act as a base station. For example, a UE may act as a scheduling entity that provides a sidelink signal between UEs in V2X or D2D, and the like. For example, a cellular phone and a car communicate with each other by using sidelink signals. The cellular phone communicates with a smart home device without relaying communication signals via a base station.

The network device in the embodiments of the present disclosure may be a device for communicating with a terminal device, and the network device may also be referred to as an access network device or a radio access network device; and for example, the network device may be a base station. The network device in the embodiments of the present disclosure may refer to a radio access network (RAN) node (or device) that connects a terminal device to a wireless network. The base station may broadly cover or be replaced by various names as below, such as: NodeB, evolved base station (evolved NodeB, eNB), next generation base station (next generation NodeB, gNB), a relay station, an access point, a transmitting and receiving point (TRP), a transmitting point (TP), a master station (MeNB), a secondary station (SeNB), a multi-standard radio (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), a positioning node, and the like. The base station may be a macro base station, a micro base station, a relay node, a donor node, or the like, or a combination thereof. The base station may also refer to a communication module, a modem, or a chip set within the aforementioned device or apparatus. The base station may also be a mobile switch center, or a device that performs a base station function in device-to-device (D2D), vehicle-to-everything (V2X), machine-to-machine (M2M) communication, a network side device in a 6G network, a device that performs a base station function in a future communication system, and the like. The base station may support networks with the same technology or different access technologies. The embodiments of the present disclosure do not limit the specific technology or the specific device form used by the network device.

The base station may be fixed or mobile. For example, a helicopter or an unmanned aerial vehicle may be configured to act as a mobile base station, and one or more cells may move according to a position of the mobile base station. In other examples, a helicopter or an unmanned aerial vehicle may be configured to function as a device that communicates with another base station.

In some deployments, the network device in the embodiments of the present disclosure may refer to a CU or a DU, or the network device may include a CU and a DU. The gNB may also include an AAU.

The network device and the terminal device may be deployed on land, including indoor or outdoor, handheld or vehicle-mounted; they may also be deployed on a water surface; they may also be deployed on an aircraft, a balloon, and a satellite in the air. The scenario in which the network device and the terminal device are located is not limited in the embodiments of the present disclosure.

It should be understood that the communication device involved in the present disclosure may be a network device, or may also be a terminal device. For example, a first communication device is a network device, and a second communication device is a terminal device. As another example, the first communication device is a terminal device, and the second communication device is a network device. As another example, both the first communication device and the second communication device are network devices, or both are terminal devices.

It should also be understood that all or part of the functions of the communication device in the present disclosure may also be implemented by a software function running on hardware, or implemented by a virtualized function instantiated on a platform (for example, a cloud platform).

Currently, in the known communication system, in order to improve the utilization rate of transmission resources, multiplexing transmission may be performed on multiple data signals on a transmission resource. Current multiplexing transmission includes orthogonal multiplexing transmission on time-domain, frequency-domain, and code-domain resources. In other words, data signals transmitted on multiple transmission resources are transmitted in an orthogonal transmission manner. Orthogonal transmission may be understood as processing data signals transmitted on multiple transmission resources into mutually orthogonal data signals for transmission and orthogonal data signals are transmitted independently of each other and do not interfere with each other. In a scenario of orthogonal transmission, for a certain transmission resource, it can only be used to transmit one type of data signal at a certain moment, resulting in a low utilization rate of the transmission resource. On the other hand, in a case of a total of transmission resources is fixed, if the number of transmission resources occupied by a certain data signal (hereinafter also referred to as a "first data signal") increases, it means that the number of transmission resources available for transmitting other data signals (hereinafter also referred to as a "second data signal") decreases, which may cause the other signals to fail to be transmitted timely.

Taking time division multiplexing transmission as an example, the first data signal and the second data signal may be transmitted on the same frequency domain and different time domains, or, the first data signal and the second data signal may occupy the same frequency-domain resource and different time-domain resources. Taking frequency division multiplexing transmission as an example, the first data signal and the second data signal may be transmitted on the same time domain but different frequency domains, or, the first data signal and the second data signal may occupy the same time-domain resource and different frequency-domain resources.

As can be seen from the above, the transmission resources occupied by the first data signal and the second data signal are the same on only one type of resource among the time-domain resource, the frequency-domain resource, and the spatial-domain resource, but are not the same on two types of resources, which causes a problem of low resource utilization rate.

For the above problem, the embodiments of the present disclosure provide a data transmission method, and in this method, the first data signal and the second data signal may be same on at least two resources among the time-domain resource, frequency-domain resource, and the spatial-domain resource, or, the first data signal and the second data signal may be transmitted non-orthogonally, for example, the first data signal and the second data signal are transmitted non-orthogonally on a first resource, so that the utilization rate of data transmission resources and spectral efficiency may be improved.

In the embodiments of the present disclosure, the first data signal and the second data signal may be data signals transmitted between a first device and a second device.

In some embodiments, the first device may be a sending side, and the second device may be a receiving side. In some possible implementations, the first device is a network device, and the second device is a terminal device; or both the first device and the second device are terminal devices; or the first device is a terminal device, and the second device is a network device.

A wireless communication method of the embodiments of the present disclosure is introduced below with reference to FIG. 10. The wireless communication method shown in FIG. 10 includes step S1010.

In step S1010, a first device sends a target data signal to a second device.

In some embodiments, the target data signal is generated based on a first data signal and a second data signal. In other words, the target data signal includes a first data signal and a second data signal that are non-orthogonal.

In some embodiments, the target data signal includes data signals for multiple second devices. The second device is a device among the multiple second devices. For example, the first data signal and the second data signal may be data signals for different second devices.

In some embodiments, a transmission resource occupied by the first data signal includes a first resource. The first resource is further used for transmitting at least part of data signals in the second data signal, or, the first resource is further used for transmitting part or all of data signals in the second data signal. In some implementations, part of signals in the first data signal and the second data signal are superposed non-orthogonally on the first resource. In some implementations, the first data signal and the second data signal are superposed non-orthogonally on the first resource. In some embodiments, the first resource may also be referred to as a superposed resource.

Since the first data signal and the second data signal are transmitted through non-orthogonal superposition, the target data signal in the embodiments of the present disclosure may also be referred to as a superposed signal.

In some embodiments, the first resource belongs to a transmission resource set, where the transmission resource set may include one or more transmission resources. All of transmission resources in the transmission resource set may be used for transmitting the second data signal, and correspondingly, part or all of the transmission resources in the transmission resource set may be used for transmitting the first data signal. That is, part or all of the transmission resources in the transmission resource set are the aforementioned first resource. The transmission resource set may be, for example, a PRB or an RB; the first resource may be, for example, a PRB, an RB, or an RE.

In some embodiments, the first resource may include one or more of the following resources: a time-domain resource, a frequency-domain resource, and a spatial-domain resource. As an implementation, the first resource may include a time-domain resource and a frequency-domain resource, or, the first data signal and the second data signal may be transmitted on the same time-domain resource and the same frequency-domain resource, or, the first data signal and the second data signal may be non-orthogonally superposed on the same time-domain resource and frequency-domain resource. As an implementation, the first resource may include a time-domain resource and a spatial-domain resource, or, the first data signal and the second data signal may be transmitted on the same time-domain resource and the same spatial-domain resource, or, the first data signal and the second data signal may be non-orthogonally superposed on the same time-domain resource and spatial-domain resource. As an implementation, the first resource may include a frequency-domain resource and a spatial-domain resource, or, the first data signal and the second data signal may be transmitted on the same frequency-domain resource and the same spatial-domain resource, or, the first data signal and the second data signal may be non-orthogonally superposed on the same frequency-domain resource and spatial-domain resource. As an implementation, the first resource may include a time-domain resource, a frequency-domain resource, and a spatial-domain resource, or, the first data signal and the second data signal may be transmitted on the same time-domain resource, the same frequency-domain resource, and the same spatial-domain resource, or, the first data signal and the second data signal may be non-orthogonally superposed on the same time-domain resource, frequency-domain resource, and spatial-domain resource.

Taking the first resource including a time-domain resource as an example, the first resource may be a symbol (also referred to as a "time-domain symbol"), a slot, a subframe, or a frame, and the like. Taking the first resource including a frequency-domain resource as an example, the first resource may include a subcarrier, a bandwidth part, a frequency band, and the like. Taking the first resource including a spatial-domain resource as an example, the first resource may include a codeword, a layer, an antenna port, and the like. Taking the first resource including a time-domain resource and a frequency-domain resource as an example, the first resource may include any one of a PRB, an RE, and an RB.

In some implementations, the first data signal and the second data signal may be data signals for the same user, and in this case, the first resource may include a transmission resource for a single stream. In other implementations, the first data signal and the second data signal may be data signals for different users, and in this case, the first resource may include a transmission resource for multiple streams.

In some embodiments, the target data signal may be generated by the first device. The first device may generate the target data signal based on the first data signal and the second data signal.

The embodiments of the present disclosure do not specifically limit the method for generating the target data signal. As an example, the target data signal is generated based on a linear superposition of the first data signal and the second data signal. As another example, the target data signal is generated based on a nonlinear superposition of the first data signal and the second data signal. These two implementations are described in detail below respectively.

### Transmission scheme 1

The first data signal and the second data signal may be transmitted non-orthogonally in a linear superposition. In the embodiments of the present disclosure, on one hand, performing non-orthogonal transmission based on a linear superposition helps simplify the complexity of non-orthogonal transmission. On the other hand, performing non-orthogonal transmission based on a linear superposition helps reduce the complexity for the second device to identify multiple signals transmitted non-orthogonally.

In some scenarios, when transmitting a signal on a transmission resource, there are usually some restrictions on the energy of the transmitted signal, therefore, in the embodiments of the present disclosure, when transmitting the first data signal and the second data signal that are superposed via the first resource, the energy of the signals transmitted on the first resource may be adjusted through a first parameter and/or a second parameter (or, the power of the signals transmitted on the first resource may be adjusted through a first parameter and/or a second parameter). That is, the parameters associated with the aforementioned linear superposition are determined based on the first parameter and/or the second parameter.

It should be noted that "the parameters associated with the aforementioned linear superposition are determined based on the first parameter and/or the second parameter", may be understood as: the parameters associated with the linear superposition contain the first parameter and/or the second parameter; or the parameters associated with the linear superposition are obtained by calculating the first parameter and/or the second parameter, which is not limited in the embodiments of the present disclosure.

In some implementations, the aforementioned first parameter is used for adjusting the energy of the first data signal transmitted on the first resource. For example, the first parameter is used for increasing the energy of the first data signal transmitted on the first resource. For another example, the first parameter is used for decreasing the energy of the first data signal transmitted on the first resource.

In some implementations, the aforementioned second parameter is used for adjusting the energy of the second data signal transmitted on the first resource. For example, the second parameter is used for increasing the energy of the second data signal transmitted on the first resource. For another example, the second parameter is used for decreasing the energy of the second data signal transmitted on the first resource.

In some scenarios, it is specified that the signal energy of the signal transmitted on the transmission resource is less than or equal to an energy threshold corresponding to the transmission resource (for example, the energy threshold is 1). Correspondingly, in some implementations, the parameters (for example, the first parameter and/or the second parameter) associated with the aforementioned linear superposition are used for adjusting a sum of the energy of the first data signal and the energy of the second data signal transmitted on the first resource to be less than or equal to the energy threshold corresponding to the first resource.

In some implementations, a value of the first parameter may be between 0 and 1, that is, the first parameter is greater than 0 and less than 1. A value of the second parameter may be between 0 and 1, that is, the second parameter is greater than 0 and less than 1.

In some implementations, the value of the first parameter and the value of the second parameter may be equal. For example, the value of the first parameter and the value of the second parameter are both 0.5. In some implementations, the values of the first parameter and the second parameter may be unequal. For example, the value of the first parameter is between 0 and 0.5, and the value of the second parameter is between 0.5 and 1. In other words, the value of the first parameter is greater than 0 and less than 0.5, and the value of the second parameter is greater than 0.5 and less than 1.

In some implementations, the sum of the value of the first parameter and the value of the second parameter is 1, and in this way, the energy corresponding to the first resource may be fully utilized, thereby improving the transmission success rate of the first data signal and the second data signal.

The embodiments of the present disclosure do not limit the aforementioned energy threshold. In some implementations, the aforementioned energy threshold may be determined based on an average energy corresponding to the first resource. For example, the aforementioned energy threshold may be equal to the average energy corresponding to the first resource. For another example, the aforementioned energy threshold may be less than the average energy corresponding to the first resource.

In the embodiments of the present disclosure, the aforementioned energy threshold may be predefined, for example, the energy threshold may be predefined through a communication protocol. Of course, the aforementioned energy threshold may also be preconfigured, for example, the energy threshold may be configured by a network device. The embodiments of the present disclosure do not impose any limitation on this.

For ease of understanding, the following introduces, in conjunction with the first parameter and the second parameter, the non-orthogonal transmission scheme based on linear superposition in the embodiments of the present disclosure. FIG. 11 illustrates a non-orthogonal transmission scheme with linear superposition.

As described above, the first resource belongs to a transmission resource set, and the target data signal transmitted on one or more first resources in the transmission resource set is represented by a matrix **S**, and correspondingly, the matrix **S** is determined by a formula **S** = **V**⊙**D₁ + X**⊙**D₂**, or, the matrix **S** satisfies **V**⊙**D₁** + **X⊙D₂**. The matrix **V** represents the first parameter associated with the first resource in the transmission resource set; matrix **X** represents the second parameter associated with the first resource in the transmission resource set; the matrix **D₁** represents the first data signal transmitted on the first resource in the transmission resource set; matrix **D₂**, represents the second data signal transmitted on the first resource in the transmission resource set; and ⊙ represents a Hadamard product.

In some implementations, assuming that the energy threshold corresponding to the first resource is 1, then matrix **V** is determined based on a formula **V** = *sqrt*(**A**), and matrix **X** is determined based on a formula **X** = *sqrt*(1 - **A**), where the matrix **A**∈[0,1], and *sqrt*() represents a square root calculation.

It should be noted that, in the embodiments of the present disclosure, the number of first resources included in the transmission resource set is not limited, and correspondingly, the dimensions of the matrices involved above (for example, matrix **S**, matrix **V**, matrix **D₁**, matrix **D₂**, matrix **A**, and matrix **X**, etc.) are associated with the dimension (or, the number) of the first resources in the transmission resource set. For example, each element in the matrix may correspond to a transmission resource in the transmission resource set. In some implementations, the dimension of the matrix is the same as the dimension of the first resource in the transmission resource set. Taking the transmission resource set as an RB as an example, the RB may be represented as including N rows and M columns of REs, and all REs in the RB are superposed transmission resources. Correspondingly, the matrix involved above may be a matrix with N rows and M columns, where M and N are positive integers.

Generally, when the first resource allocated by the system changes, the dimension of the above-mentioned matrix also changes. For example, if the first resource allocated by the system is 2 RBs, then the dimension of the matrix is the same as the dimension of REs in the 2 RBs. Assuming that an RB may be represented as including N rows and M columns of REs, then 2 RBs include 2N rows and 2M columns of REs, and the dimension corresponding to 2 RBs is 2N rows and 2M columns. In this case, if all REs in the 2 RBs are superposed transmission resources, then the dimension of the matrix involved above may be a matrix with 2N rows and 2M columns.

In some embodiments, the first parameter may be determined based on a first model, or, the first parameter is learnable. Parameter optimization may be performed on the first parameter according to training data in the training process. By optimizing the first parameter through the first model, the flexibility of the first parameter may be increased, and the success rate of receiving the data signal may be improved. For example, when the size of the resource block allocated by the system changes, the first parameter (such as the matrix **V**) may undergo equal-dimension changes accordingly. The first model may be, for example, an AI model or a machine learning model, and the embodiments of the present disclosure do not specifically limit this. Taking the first model as an AI model as an example, the embodiments of the present disclosure do not limit the field to which the AI model is adapted.

In some embodiments, the first parameter may also be non-learnable, or, the first parameter is a preconfigured parameter. By preconfiguring the first parameter, the complexity of linear superposition may be reduced. In some implementations, the first parameter may be preconfigured by the first device (i.e., the sending side), or the first parameter is a parameter predefined in a protocol.

In some embodiments, the second parameter may be determined based on a second model, or, the second parameter is learnable. Parameter optimization may be performed on the second parameter according to training data in the training process. By optimizing the first parameter through the first model, the flexibility of the first parameter may be increased, and the success rate of receiving the data signal may be improved. For example, when the size of the resource block allocated by the system changes, the second parameter (such as the matrix **X**) may undergo equal-dimension changes accordingly. The second model may be, for example, an AI model or a machine learning model, and the embodiments of the present disclosure do not specifically limit this. Taking the second model as an AI model as an example, the embodiments of the present disclosure do not limit the field to which the AI model is adapted.

In some embodiments, the second parameter may also be non-learnable, or, the second parameter is a preconfigured parameter. By preconfiguring the first parameter, the complexity of linear superposition may be reduced. In some implementations, the second parameter may be preconfigured by the first device (i.e., the sending side), or the second parameter is a parameter predefined in a protocol.

The above introduces the scheme for determining parameters associated with the linear superposition based on the first parameter and/or the second parameter in the embodiments of the present disclosure. In other implementations, the aforementioned parameters associated with the linear superposition may be determined based on a symbol set corresponding to the first data signal and a symbol set corresponding to the second data signal.

The symbol set associated with the first data signal may include one or more symbols that may be used to transmit the first data signal. In some scenarios, in order to improve the transmission performance of the first data signal, the first data signal may be modulated. Correspondingly, the aforementioned symbol set associated with the first data signal may include modulation symbols associated with modulation constellation points of the first data signal. The modulation constellation points of the first data signal are associated with the modulation scheme of the first data signal.

As introduced above, if the first data signal is modulated, then correspondingly, the amplitude of the first data signal indicated in the matrix **D₁** associated with the first data signal may be a modulated amplitude, and/or the phase of the first data signal indicated in the matrix **D₁** associated with the first data signal may be a modulated phase. In this case, the matrix **D₁** associated with the first data signal belongs to a modulation constellation point set associated with the modulation scheme of the first data signal. Taking the modulation scheme of the first data signal as BPSK (Binary Phase Shift Keying) as an example, the modulation constellation point set **Q₁** associated with BPSK may be represented as ***Q*₁** = {-1, 1}, and correspondingly, the matrix associated with the first data signal is **D₁** ∈ **Q₁**. Taking the modulation scheme of the first data signal as QPSK (Quadrature Phase Shift Keying) as an example, the modulation constellation point set **Q₁** associated with QPSK may be represented as **Q₁** = {0.707 + 0.707j, 0.707 - 0.707), -0.707 + 0.707), -0.707 - 0.707j}, and correspondingly, the matrix associated with the first data signal is **D₁** ∈ **Q₁**.

The symbol set associated with the second data signal may include one or more symbols that may be used to transmit the second data signal. In some scenarios, to improve the transmission performance of the second data signal, the second data signal may be modulated. Correspondingly, the aforementioned symbol set associated with the second data signal may include modulation symbols associated with modulation constellation points of the second data signal. The modulation constellation points of the second data signal are associated with the modulation scheme of the second data signal.

As introduced above, if the second data signal is modulated, then correspondingly, the amplitude of the second data signal indicated in the matrix **D₂** associated with the second data signal may be a modulated amplitude, and/or the phase of the second data signal indicated in the matrix **D₂** associated with the second data signal may be a modulated phase. In this case, the matrix **D₂** associated with the second data signal belongs to the modulation constellation point set associated with the modulation scheme of the second data signal. Taking the modulation scheme of the second data signal as BPSK as an example, the modulation constellation point set **Q₂** associated with BPSK may be represented as ***Q*₂** = {-1, 1}, and correspondingly, the matrix associated with the second data signal is **D₂** E **Q₂**. Taking the modulation scheme of the second data signal as QPSK as an example, the modulation constellation point set **Q₂** associated with QPSK may be represented as **Q₂** = {0.707 + 0.707j, 0.707 - 0.707), -0.707 + 0.707), -0.707 - 0.707j} , and correspondingly, the matrix associated with the first data signal is **D₂** ∈ **Q₂**.

Taking the QPSK modulation scheme as an example, FIG. 12 illustrates the training process of modulation constellation points. Referring to FIG. 12(a), an initial modulation constellation point set associated with the first data signal (or the second data signal) may be represented as **C** = {0.707 + 0.707j, 0.707 - 0.707j, - 0.707 + 0.707j, - 0.707 - 0.707j}. Correspondingly, after learning, the learned modulation constellation point set associated with the first data signal (or the second data signal) may be represented as **C' =** {(0.707 + *x*₁) + (0.707 + *x*₂)j, (0.707 + *x*₃) - (0.707 + *x*₄)j, - (0.707 + *x*₅) + (0.707 - *x*₆)j, - (0.707 + *x*₇) - (0.707 + *x*₈)j}, as shown in FIG. 12(b).

Referring to FIG. 12(a) to (b), the optimization of the modulation constellation point set of the first data signal (or the second data signal) may be understood as set shaping optimization of the initial modulation constellation point set, which helps to improve the transmission performance of the first data signal (or the second data signal).

It should be noted that the trained constellation points are only an example, and the actual learning result may vary according to the training data or initialization setting, etc.

In some embodiments, the symbol set (such as the matrix **D₁**) corresponding to the first data signal may be determined based on a third model, or, the symbol set corresponding to the first data signal is learnable. By optimizing the symbol set corresponding to the first data signal by using the third model, it is beneficial to improve the success rate of receiving the data signal. The third model may be, for example, an AI model or a machine learning model, and the embodiments of the present disclosure do not specifically limit this. Taking the third model as an AI model as an example, the embodiments of the present disclosure do not limit the field to which the AI model is adapted.

In some implementations, the first data signal may be directly processed by using the third model, to obtain the symbol set corresponding to the first data signal. In other implementations, the first data signal may be modulated first, and then the modulated first data signal is processed by using the third model. The modulation scheme may include the BPSK modulation and/or QPSK modulation described above. The modulated symbol is a symbol in a modulation constellation point set; for example, the modulated symbol may be a symbol in a modulation constellation point set that is set by the system. For example, the third model may be used to initialize symbols in the modulation constellation point set, and then geometric shaping optimization is performed on the initialized symbols based on the third model, to obtain the symbol set corresponding to the first data signal.

In some embodiments, the symbol set (e.g., the matrix **D₁**) corresponding to the first data signal may be non-learnable, or, the symbol set corresponding to the first data signal is a preset symbol set. For example, the symbol set corresponding to the first data signal is a modulation constellation point set, or, symbols corresponding to the first data signal belong to a modulation constellation point set. The modulation constellation point set may be a modulation constellation point set that is set by the system. By setting the symbol set corresponding to the first data signal as a preset symbol set, the complexity of non-orthogonal transmission may be reduced.

In some embodiments, a symbol set (e.g., the matrix **D₂**) corresponding to the second data signal may be determined based on a fourth model, or, the symbol set corresponding to the second data signal is learnable. By optimizing the symbol set corresponding to the second data signal by using the fourth model, it is beneficial to improve the success rate of receiving the data signal. The fourth model may be, for example, an AI model or a machine learning model, and the embodiments of the present disclosure do not specifically limit this. Taking the fourth model as an AI model as an example, the embodiments of the present disclosure do not limit the field to which the AI model is adapted.

In some implementations, the second data signal may be directly processed by using the fourth model, to obtain the symbol set corresponding to the second data signal. In other implementations, the second data signal may be modulated first, and then the modulated second data signal is processed by using the fourth model. The modulation scheme may include the BPSK modulation and/or QPSK modulation described above. The modulated symbol is a symbol in a modulation constellation point set; for example, the modulated symbol may be a symbol in a modulation constellation point set that is set by the system. For example, the fourth model may be used to initialize symbols in the modulation constellation point set, and then geometric shaping optimization is performed on the initialized symbols based on the fourth model, to obtain the symbol set corresponding to the second data signal.

In some embodiments, the symbol set (e.g., the matrix **D**₂) corresponding to the second data signal may be non-learnable, or, the symbol set corresponding to the second data signal is a preset symbol set. For example, the symbol set corresponding to the second data signal is a modulation constellation point set, or, symbols corresponding to the second data signal belong to a modulation constellation point set. The modulation constellation point set may be a modulation constellation point set that is set by the system. By setting the symbol set corresponding to the second data signal as a preset symbol set, the complexity of non-orthogonal transmission may be reduced.

In some embodiments, in order to improve the success rate of receiving the first data signal and the second data signal, the first data signal and the second data signal may have different first statistical distribution characteristics, and the different statistical distribution characteristics may be used to distinguish between the first data signal and the second data signal.

In some embodiments, the first statistical distribution characteristic may include one or more of: a modulation scheme, a coding scheme, and an information source type.

As an example, the first data signal and the second data signal may have different modulation schemes. The modulation scheme may include QPSK and BPSK. For example, the modulation scheme for the first data signal is QPSK, and the modulation scheme for the second data signal is BPSK.

As another example, the first data signal and the second data signal may have different coding schemes. The coding scheme may include a code rate and/or a channel coding scheme. The code rate may include 378/1024 and 434/1024. The channel coding scheme may include a Turbo code coding scheme and an LDPC (Low Density Parity Check) code coding scheme.

In some implementations, the first data signal and the second data signal may have different code rates. For example, the code rate corresponding to the first data signal is 378/1024, and the code rate corresponding to the second data signal is 434/1024. Alternatively, the first data signal may be encoded by using the code rate of 378/1024, and the second data signal may be encoded by using the code rate of 434/1024. When the code rates used for the first data signal and the second data signal are different, the channel coding schemes used for the first data signal and the second data signal may be the same or different. For example, the first data signal may be encoded by using the LDPC code with the code rate of 378/1024, and the second data signal may be encoded by using the LDPC code with the code rate of 434/1024. Alternatively, the first data signal may be encoded by using the LDPC code with the code rate of 378/1024, and the second data signal may be encoded by using the Turbo code with the code rate of 434/1024.

In some implementations, the first data signal and the second data signal may have different channel coding schemes. For example, the coding scheme for the first data signal is the Turbo code coding scheme, and the coding scheme for the second data signal is the LDPC code coding scheme.

As another example, the first data signal and the second data signal may have different information source types. The information source type may include one or more of: image data, voice data, text data, and CSI. For example, the information source of the first data signal is image data, and the information source of the second data signal is voice data. As another example, the information source of the first data signal is text data, and the information source of the second data signal is CSI.

### Multi-layer transmission or multi-user transmission

In some embodiments, the first data signal may include multiple first signals; the multiple first signals may be transmitted in non-orthogonal superposition with the second data signal. In some implementations, the multiple first signals may correspond to multiple second devices (or multiple users), or, the multiple first signals are signals for multiple second devices (or multiple users). The first device may send the multiple first signals to the multiple second devices respectively. In some implementations, the multiple first signals may correspond to multiple transmission layers of the first device, or, the multiple first signals are signals for multiple transmission layers. The transmission layer may be understood as a number of streams of the transmission. The first device may send the multiple first signals via the multiple transmission layers.

In some embodiments, the second data signal may include multiple second signals; the multiple second signals may be transmitted in non-orthogonal superposition with the second data signal. In some implementations, the multiple second signals may correspond to multiple second devices (or multiple users), or, the multiple second signals are signals for multiple second devices (or multiple users). The first device may send the multiple second signals to the multiple second devices respectively. In some implementations, the multiple second signals may correspond to multiple transmission layers of the first device, or, the multiple second signals are signals for multiple transmission layers. The transmission layer may be understood as a number of streams of the transmission. The first device may send the multiple second signals through multiple transmission layers.

If the first data signal includes multiple first signals and the second data signal includes multiple second signals, and when performing a linear superposition on the first data signal and the second data signal, the linear superposition may be performed by: linearly superposing a first signal and a second signal in the same layer; or linearly superposing a first signal and a second signal for the same second device. For example, a first signal of a first layer may be linearly superposed with a second signal of the first layer, a first signal of a second layer may be linearly superposed with a second signal of the second layer, and so on. As another example, a first signal for a user 1 may be linearly superposed with a second signal for the user 1, a first signal for a user 2 may be linearly superposed with a second signal for the user 2, and so on.

To enable the second device to better distinguish different first signals and improve the success rate of receiving the first signals, the multiple first signals may have different second statistical distribution characteristics. The second statistical distribution characteristic may include one or more of: a modulation scheme, a coding scheme, an information source type, and a first parameter. This first parameter may refer to the first parameter described above, and the first parameter may be used to adjust transmission energy of the first signal.

As an example, the multiple first signals may have different modulation schemes. The modulation scheme may include QPSK and BPSK. For example, the modulation scheme for one signal among the multiple first signals is QPSK, and the modulation scheme for another signal among the multiple first signals is BPSK. Taking the first data signal including first signals of two layers as an example, a modulation scheme for a first signal of a first layer may be QPSK, and a modulation constellation point set corresponding to the first signal of the first layer may be denoted as **Q₁₁ =** {0.707 + 0.707j, 0.707 - 0.707j, -0.707 + 0.707j, -0.707 - 0.707j}; a modulation scheme for a first signal of a second layer may be BPSK, and a modulation constellation point set corresponding to the first signal of the second layer may be denoted as **Q₁₂ =** {-1,1}. Taking the first data signal including first signals for two users as an example, a modulation scheme for a first signal for a first user may be QPSK, and a modulation constellation point set corresponding to the first signal for the first user may be denoted as **Q₁₁ =** {0.707 + 0.707j, 0.707 - 0.707j, -0.707 + 0.707j, -0.707 - 0.707j}; a modulation scheme for a first signal for a second user may be BPSK, and a modulation constellation point set corresponding to the first signal for the second user may be denoted as **Q₁₂ =** {-1,1}.

As another example, the multiple first signals may have different coding schemes. The coding scheme may include a code rate and/or a channel coding scheme. The code rate may include 378/1024 and 434/1024. The channel coding scheme may include a Turbo code coding scheme and an LDPC code coding scheme.

In some implementations, multiple first signals may have different code rates. Taking the first data signal including first signals of two layers as an example, a code rate corresponding to a first signal of a first layer may be 378/1024, and a code rate corresponding to a first signal of a second layer may be 434/1024. In other words, the first signal of the first layer may be encoded with a code rate of 378/1024, and the first signal of the second layer may be encoded with a code rate of 434/1024. When different code rates are used for the multiple first signals, channel coding schemes used for the multiple first signals may be the same or different. For example, the first signal of the first layer may be encoded with the LDPC code with the code rate of 378/1024, and the first signal of the second layer may be encoded with the LDPC code with the code rate of 434/1024. Alternatively, the first signal of the first layer may be encoded with the LDPC code with the code rate of 378/1024, and the first signal of the second layer may be encoded with the Turbo code with the code rate of 434/1024. Taking the first data signal including first signals for two users as an example, a code rate corresponding to a first signal for a first user may be 378/1024, and a code rate corresponding to a first signal for a second user may be 434/1024. In other words, the first signal for the first user may be encoded with the code rate of 378/1024, and the first signal for the second user may be encoded with the code rate of 434/1024. When different code rates are used for the multiple first signals, channel coding schemes used for the multiple first signals may be the same or different. For example, the first signal for the first user may be encoded with the LDPC code with the code rate of 378/1024, and the first signal for the second user may be encoded with the LDPC code with the code rate of 434/1024. Alternatively, the first signal for the first user may be encoded with the LDPC code with the code rate of 378/1024, and the first signal for the second user may be encoded with the Turbo code with the code rate of 434/1024.

In some implementations, the multiple first signals may have different channel coding schemes. Taking the first data signal including first signals of two layers as an example, a coding scheme of a first signal of a first layer may be a Turbo code coding scheme, and a coding scheme of a first signal of a second layer may be an LDPC code coding scheme. Taking the first data signal including first signals for two users as an example, a coding scheme of a first signal for a first user may be a Turbo code coding scheme, and a coding scheme of a first signal for a second user may be an LDPC code coding scheme.

As another example, the multiple first signals may have different information source types. The information source type may include one or more of: image data, voice data, text data, and CSI. Taking the first data signal including first signals of two layers as an example, an information source of a first signal of a first layer is image data, and an information source of a first signal of a second layer is voice data; or, an information source of the first signal of the first layer is text data, and an information source of the first signal of the second layer is CSI. Taking the first data signal including first signals for two users as an example, an information source of a first signal for a first user is image data, and an information source of a first signal for a second user is voice data; or, an information source of the first signal for the first user is text data, and an information source of the first signal for the second user is CSI.

As another example, values of first parameters corresponding to the multiple first signals are different. Taking the first data signal including first signals of two layers as an example, a first parameter corresponding to a first signal of a first layer is **V₁**, a first parameter corresponding to a first signal of a second layer is **V₂**, where **V₁** ≠ **V₂**. Taking the first data signal including first signals for two users as an example, a first parameter corresponding to a first signal for a first user is **V₃**, a first parameter corresponding to a first signal for a second user is **V₄**, where **V₃** ≠ **V₄**.

Similar to the first data signal, the second data signal may also include multiple second signals. The multiple second signals may be transmitted in non-orthogonal superposition with the first data signal (such as the multiple first signals). In some implementations, the multiple second signals may correspond to multiple second devices (or multiple users), or, the multiple second signals are signals for multiple second devices (or multiple users). The first device may send the multiple second signals to the multiple second devices respectively. In some implementations, the multiple second signals may correspond to multiple transmission layers of the first device, or, the multiple second signals are signals for multiple transmission layers. The transmission layer may be understood as a number of streams of the transmission. The first device may send the multiple second signals through multiple transmission layers.

To enable the second device to better distinguish between different second signals and improve the success rate of receiving the second signals, the multiple second signals may have different second statistical distribution characteristics. The second statistical distribution characteristic may include one or more of: a modulation scheme, a coding scheme, an information source type, and a second parameter. This second parameter may refer to the second parameter described above, and the second parameter may be used to adjust transmission energy of the second signal. The content related to the second statistical distribution characteristic is similar to the content related to the second statistical distribution characteristic corresponding to the multiple first signals described above, which will not be repeated here for brevity.

### Transmission scheme 2

In some embodiments, the first data signal and the second data signal may be transmitted non-orthogonally in a nonlinear superposition. In other words, the target data signal may be generated based on the nonlinear superposition of the first data signal and the second data signal. In the embodiments of the present disclosure, generating the target data signal based on the nonlinear superposition helps improve the flexibility in the superposition of the first data signal and the second data signal.

In some implementations, the target data signal is generated by using a fifth model to perform a nonlinear superposition on the first data signal and the second data signal, or, the fifth model may be used to perform a nonlinear superposition on the first data signal and the second data signal. The fifth model may be, for example, an AI model or a machine learning model, which is not specifically limited in the embodiments of the present disclosure. Taking the fifth model as an AI model as an example, the embodiments of the present disclosure do not limit the field to which the AI model is adapted.

In some implementations, the aforementioned using the fifth model to perform the nonlinear superposition on the first data signal and the second data signal may refer to using the fifth model directly to perform the nonlinear superposition on the first data signal and the second data signal, or may refer to using the fifth model to perform the nonlinear superposition on a processed data signal. The processed data signal may be obtained by a first processing operation on the first data signal and the second data signal.

There are multiple schemes for the first processing operation, which are not specifically limited in the embodiments of the present disclosure. For example, the first processing operation may include one or more of: a concatenation operation, linear superposition, processing of a sixth model, and processing of a seventh model. The sixth model may be used to process the first data signal, and the seventh model may be used to process the second data signal. The sixth model may be an AI model or a machine learning model. The seventh model may be an AI model or a machine learning model.

In some embodiments, the first processing operation may include linear superposition. The fifth model may be used to perform the nonlinear superposition on the linearly superposed first data signal and second data signal. The scheme of the linear superposition may refer to the foregoing description, and for brevity, is not repeated here.

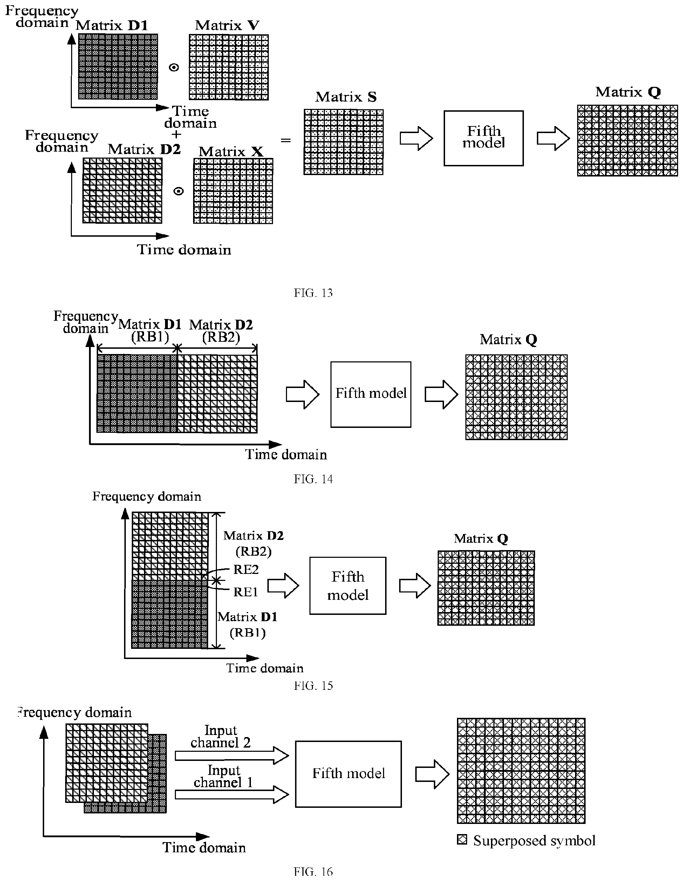

As shown in FIG. 13, assuming that dimensions of the first data signal and the second data signal are N×M, then the matrix **D₁** associated with the first data signal and the matrix **D₂** associated with the second data signal may be represented as matrices of N×M, the first parameter may be represented as a matrix **V** of N×M, and the second parameter may be a matrix **X** of N×M. Correspondingly, a matrix **S** through the linear superposition may be expressed and determined as **S = V⊙D₁** + **X**⊙**D₂**, where the matrix **V =** *sqrt* (**A**) ∈ **[0,1]**^{*N*×*M*}, the matrix **X =** *sqrt* (1 - **A**) ∈ **[0,1]**^{*N*×*M*}, and **A** ∈ **[0,1]^{*N*×*M*}.** Then, the matrix **S** is input into the fifth model, to use the fifth model to perform a nonlinear superposition on the linearly superposed matrix **S**, to obtain a matrix **Q** of the target data signal.

In some embodiments, taking the first processing operation including a concatenation operation as an example, the fifth model may be used to perform the nonlinear superposition on the concatenated first data signal and second data signal.

The embodiments of the present disclosure do not specifically limit the scheme of concatenation. In some implementations, the scheme of concatenation may include concatenating the first data signal and the second data signal in the time domain, or concatenating transmission resources occupied by the first data signal and transmission resources occupied by the second data signal in the time domain, or concatenating the transmission resources occupied by the first data signal and the transmission resources occupied by the second data signal in a time domain dimension, or concatenating transmission resources for transmitting the first data signal and transmission resources for transmitting the second data signal in the time domain dimension.

For example, concatenating in the time domain dimension may include that a last time-domain resource corresponding to transmission resources occupied by the first data signal is earlier than a first time-domain resource corresponding to transmission resources occupied by the second data signal, and the last time-domain resource corresponding to the first data signal is adjacent in the time domain to the first time-domain resource corresponding to the second data signal. Alternatively, the transmission resources occupied by the first data signal and the transmission resources occupied by the second data signal are consecutive in the time domain, and the last time-domain resource of the transmission resources occupied by the first data signal is earlier than the first time-domain resource corresponding to the transmission resources occupied by the second data signal, as shown in FIG. 14.

With reference to FIG. 14, taking the time-domain resources being symbols corresponding to REs as an example, the transmission resources occupied by the first signal includes RB1, and the transmission resources occupied by the second signal includes RB2, and correspondingly, concatenating the transmission resources occupied by the first signal and the transmission resources occupied by the second signal in the time domain, may be understood as concatenating REs within RB1 and REs within RB2 in the time domain. That is, the last symbol in RB1 is concatenated with the first symbol in RB2, so that the last symbol in RB1 is a previous adjacent symbol to the first symbol in RB2.

In other implementations, the aforementioned concatenation may include concatenating the first data signal and the second data signal in the frequency domain, or concatenating the transmission resources occupied by the second data signal and the transmission resources occupied by the first data signal in a frequency-domain dimension.

For example, a first frequency-domain resource among the transmission resources occupied by the first data signal is a frequency-domain resource with the highest frequency among the transmission resources occupied by the first data signal, and a second frequency-domain resource among the transmission resources occupied by the second data signal is a frequency-domain resource with the lowest frequency among the transmission resources occupied by the second data signal. Accordingly, concatenating in the frequency-domain dimension may include that the frequency of the first frequency-domain resource is lower than the frequency of the second frequency-domain resource, and the frequency of the first frequency-domain resource is consecutive with the frequency of the second frequency-domain resource.

With reference to FIG. 15, the transmission resources occupied by the first signal include RB1, and the first frequency-domain resource is RE1 with the highest frequency in RB1. The transmission resources occupied by the second signal include RB2, and the second frequency-domain resource is RE2 with the lowest frequency in RB2. Correspondingly, concatenating the transmission resources occupied by the first signal and the transmission resources occupied by the second signal in the frequency domain, may be understood as concatenating RE1 and RE2 in the frequency domain, so that the concatenated RE1 and RE2 are consecutive in the frequency domain, and the frequency corresponding to RE1 is lower than the frequency corresponding to RE2.

In other implementations, the aforementioned concatenation may include concatenating based on an input channel of the first data signal and an input channel of the second signal, where the input channel is an input channel of the fifth model. That is, the input channel of the fifth model may include the input channel of the first data signal and the input channel of the second data signal, and correspondingly, the aforementioned concatenation may include concatenating the first data signal input through the input channel of the first data signal with the second data signal input through the input channel of the second data signal.

It should be noted that, in the aforementioned process of concatenating based on the input channels, signals input through different input channels may be associated with different weights, and of course, signals input through different input channels may be associated with the same weight, which is not limited in the embodiments of the present disclosure. Taking the weight associated with the input channel of the first data signal as weight 1 and the weight associated with the input channel of the second data signal as weight 2 as an example, the concatenated signal may be determined based on the weight associated with input channel 1, the first data signal, the weight associated with input channel 2, and the second data signal. For example, the concatenated signal may be determined based on a sum of a processed first data signal and a processed second data signal, where the processed first data signal may be determined based on a first weight and the first data signal, and the processed second data signal may be determined based on a second weight and the second data signal.

With reference to FIG. 16, the first data signal may be input to the fifth model through input channel 1, and the second data signal may be input to the fifth model through input channel 2. Correspondingly, before using the fifth model to perform the nonlinear superposition on the first data signal and the second data signal, the first data signal and the second data signal may be concatenated based on the input channels, to obtain the concatenated signal.

The embodiments of the present disclosure do not specifically limit the concatenation based on the input channels. In some implementations, the concatenated signal may be determined based on a sum of a processed first data signal and a processed second data signal, where the processed first data signal may be determined based on a first weight associated with the first input channel, and the first data signal, and the processed second data signal may be determined based on a second weight associated with the second input channel, and the second data signal.

In the embodiments of the present disclosure, the generation of the concatenated signal is not specifically limited. For example, the concatenated signal may be equal to the sum of the processed first data signal and the processed second data signal. For another example, the concatenated signal may be obtained by processing the sum of the processed first data signal and the processed second data signal.

In addition, the aforementioned processed first data signal is determined based on the first weight and the first data signal, for example, which may include that the processed first data signal is equal to a product of the first weight and the first data signal. For another example, it may include that the processed first data signal is obtained by processing the product of the first weight and the first data signal. Correspondingly, the aforementioned processed second data signal is determined based on the second weight and the second data signal, for example, which may include that the processed second data signal is equal to a product of the second weight and the second data signal. For another example, it may include that the processed second data signal is obtained by processing the product of the second weight and the second data signal.

In some implementations, after performing the nonlinear superposition on the first data signal and the second data signal based on the fifth model, the size of the transmission resource set may be exceeded, or, the dimension of the nonlinearly superposed first data signal and second data signal is greater than the dimension corresponding to the transmission resource set. Therefore, the fifth model may process the first data signal and the second data signal to match the size of the transmission resource set. In some implementations, the fifth model may include a downsampling computation process. Accordingly, the fifth model may utilize the downsampling computation process to process the first data signal and the second data signal to match the size of the transmission resource set. For example, if the fifth model is a CNN and the first data signal and the second data signal are concatenated in the time-domain dimension or the frequency-domain dimension, the fifth model may utilize the downsampling computation process in the convolution processing process performed on the first data signal and the second data signal, to enable that a nonlinear superposition result of the first data signal and the second data signal output from the fifth model matches the size of the transmission resource set (or matches the dimension required for the target data signal). For another example, if the fifth model is a CNN and the first data signal and the second data signal are concatenated based on the input channels, the number of convolutional channels in the fifth model may be adjusted in this case, to enable that a nonlinear superposition result of the first data signal and the second data signal output from the fifth model matches the size of the transmission resource set (or matches the dimension required for the target data signal).

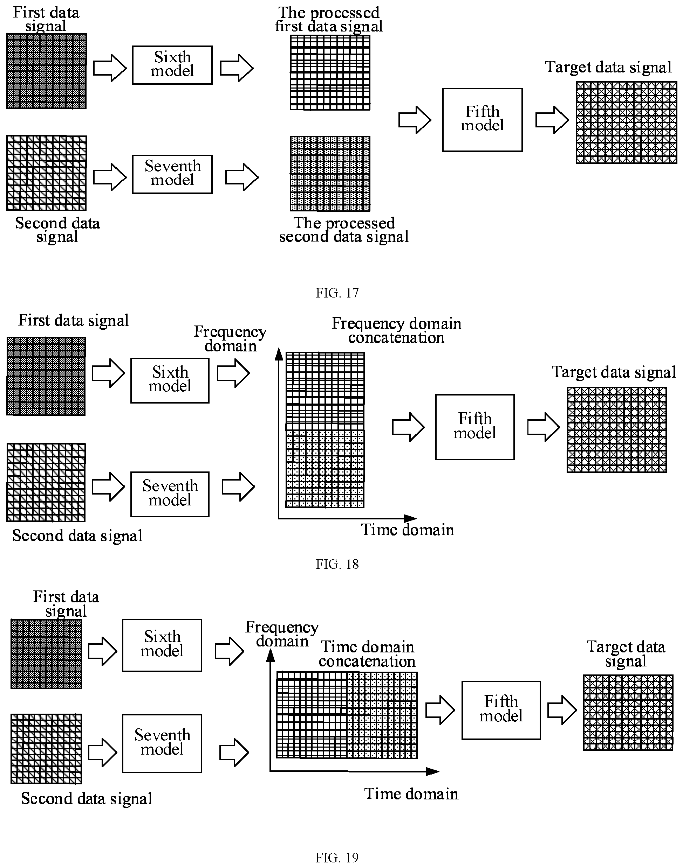

In FIG. 17, in some embodiments, the first processing operation may include processing of a sixth model and processing of a seventh model. In some implementations, the sixth model may be used to process the first data signal to obtain a processed first data signal, and the seventh model may be used to process the second data signal to obtain a processed second data signal. Furthermore, the fifth model may be used to perform the nonlinear superposition on the processed first data signal and the processed second data signal. By using the sixth model to process the first data signal and using the seventh model to process the second data signal, the adaptability between the signal to be transmitted and wireless environment characteristics may be improved.

In some implementations, the sixth model may be used to adjust a symbol set of the first data signal, and the seventh model may be used to adjust a symbol set of the second data signal. Taking the symbol set being an adjustment constellation point set as an example, the sixth model may be used to adjust modulation constellation points of the first data signal, and the seventh model may be used to adjust modulation constellation points of the second data signal.

In some embodiments, the sixth model may be used to learn correlation of the first data signal in the frequency domain or the time domain, so that the first data signal processed by the sixth model is more applicable to the subsequent linear superposition procedure or nonlinear superposition procedure, and is more adapted to characteristics of the wireless environment corresponding to current training data. The seventh model may be used to learn correlation of the second data signal in the frequency domain or the time domain, so that the second data signal processed by the seventh model is more applicable to the subsequent linear superposition procedure or nonlinear superposition procedure, and is more adapted to characteristics of the wireless environment corresponding to current training data.

In some embodiments, the first processing operation may include a concatenation operation, processing of the sixth model, and processing of the seventh model. The concatenation operation may include one or more of: time-domain concatenation, frequency-domain concatenation, and channel concatenation. In some implementations, the sixth model may be used to process the first data signal to obtain a processed first data signal, and the seventh model may be used to process the second data signal to obtain a processed second data signal. The concatenation operation is performed on the processed first data signal and the processed second data signal to obtain a concatenated data signal. The fifth model may be used to perform the nonlinear superposition on the concatenated processed signal.

Taking FIG. 18 as an example, the first processing operation shown in FIG. 18 includes frequency-domain concatenation, processing of the sixth model, and processing of the seventh model. For example, the first data signal is processed using the sixth model to obtain the processed first data signal, and the second data signal is processed using the seventh model to obtain the processed second data signal. Frequency-domain concatenation is performed on the processed first data signal and the processed second data signal to obtain the concatenated data signal. The fifth model may be used to perform the nonlinear superposition on the concatenated processed signal.

Taking FIG. 19 as an example, the first processing operation shown in FIG. 19 includes time-domain concatenation, processing of the sixth model, and processing of the seventh model. For example, the first data signal is processed using the sixth model to obtain the processed first data signal, and the second data signal is processed using the seventh model to obtain the processed second data signal. Time-domain concatenation is performed on the processed first data signal and the processed second data signal to obtain the concatenated data signal. The fifth model may be used to perform the nonlinear superposition on the concatenated processed signal.

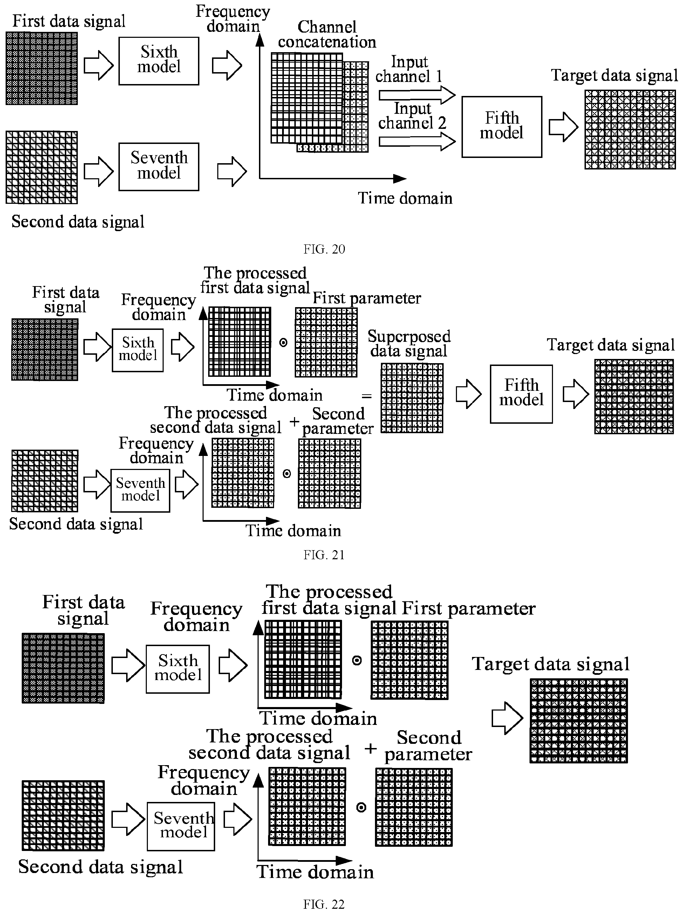

Taking FIG. 20 as an example, the first processing operation shown in FIG. 20 includes channel concatenation, processing of the sixth model, and processing of the seventh model. For example, the first data signal is processed using the sixth model to obtain the processed first data signal, and the second data signal is processed using the seventh model to obtain the processed second data signal. Channel concatenation is performed on the processed first data signal and the processed second data signal to obtain the concatenated data signal. The fifth model may be used to perform the nonlinear superposition on the concatenated processed signal.

In some embodiments, the first processing operation may include linear superposition, processing of the sixth model, and processing of the seventh model. For example, taking FIG. 21 as an example, the first data signal is processed using the sixth model to obtain the processed first data signal, and the second data signal is processed using the seventh model to obtain the processed second data signal. Linear superposition is performed on the processed first data signal and the processed second data signal to obtain the superposed data signal. The fifth model may be used to perform the nonlinear superposition on the superposed data signal. The linear superposition may be any superposition described above, and for brevity, it is not repeated here.

According to some embodiments, the target data signal may be obtained by performing processing of the sixth model, processing of the seventh model, and linear superposition on the first data signal and the second data signal. For example, as shown in FIG. 22, the first data signal is processed using the sixth model to obtain the processed first data signal, and the second data signal is processed using the seventh model to obtain the processed second data signal. Linear superposition is performed on the processed first data signal and the processed second data signal to obtain the superposed data signal.

As can be seen from the above, the first data signal includes multiple first signals, and the second data signal includes multiple second signals. The above first processing operation may be for the multiple first signals and/or the multiple second signals. For example, the sixth model may be used to process the multiple first signals to obtain multiple processed first signals. As another example, the seventh model may be used to process the multiple second signals to obtain multiple processed second signals.

The following describes by taking the first processing operation including processing of the sixth model, processing of the seventh model, and a concatenation operation as an example.

If concatenation is performed on the multiple first signals and the multiple second signals, the first signal and the second signal of the same type (e.g., the same layer or the same user) may be concatenated. For example, the first signal and the second signal of the same layer may be concatenated. Taking the first data signal including first signals of two layers and the second data signal including second signals of two layers as an example, the first signal of the first layer and the second signal of the first layer may be concatenated, and the first signal of the second layer and the second signal of the second layer may be concatenated. As another example, the first signal and the second signal for the same user may be concatenated. Taking the first data signal including first signals for two users and the second data signal including second signals for two users as an example, the first signal for the first user and the second signal for the first user may be concatenated, and the first signal for the second user and the second signal for the second user may be concatenated. The concatenation operation in the following description is the similar concatenation, and for brevity, it will not be repeated below.

In some embodiments, the first processing operation may include processing of the sixth model, processing of the seventh model, and frequency-domain concatenation. For example, the multiple first signals may be processed using the sixth model to obtain multiple processed first signals, and the multiple second signals may be processed using the seventh model to obtain multiple processed second signals. Frequency-domain concatenation is performed on the multiple processed first signals and the multiple processed second signals to obtain multiple concatenated signals. The fifth model may be used to perform the nonlinear superposition on the multiple concatenated signals respectively, to obtain multiple nonlinearly superposed signals.

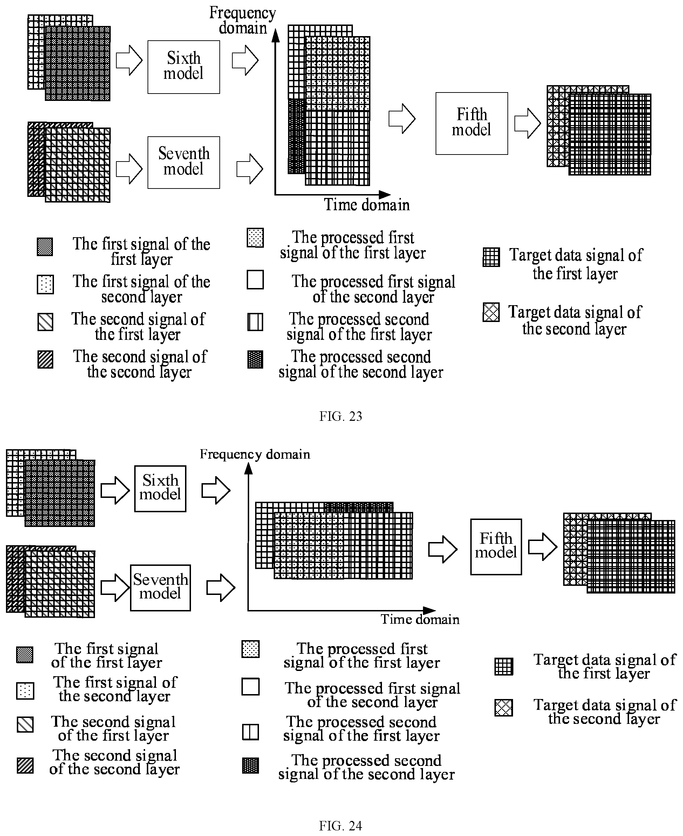

The above frequency-domain concatenation may refer to performing frequency-domain concatenation on the first signal and the second signal of the same type (e.g., the same layer or the same user). As shown in FIG. 23, taking multi-layer transmission as an example, assuming that the first data signal includes first signals of two layers and the second data signal includes second signals of two layers, frequency-domain concatenation may be performed on the first signal of the first layer processed by the sixth model and the second signal of the first layer processed by the seventh model to obtain a first concatenated signal. Frequency-domain concatenation may be performed on the first signal of the second layer processed by the sixth model and the second signal of the second layer processed by the seventh model to obtain a second concatenated signal. The fifth model may be used to process the first concatenated signal and the second concatenated signal. For example, the fifth model may be used to process the first concatenated signal to obtain the nonlinear superposed signal of the first layer. The fifth model may be used to process the second concatenated signal to obtain the nonlinear superposed signal of the second layer.

In some embodiments, the first processing operation may include processing of the sixth model, processing of the seventh model, and time-domain concatenation. For example, the multiple first signals may be processed using the sixth model to obtain multiple processed first signals, and the multiple second signals may be processed using the seventh model to obtain multiple processed second signals. Time-domain concatenation is performed on the multiple processed first signals and the multiple processed second signals to obtain multiple concatenated signals. The fifth model may be used to perform the nonlinear superposition on the multiple concatenated signals respectively, to obtain multiple nonlinearly superposed signals.

The above time-domain concatenation may refer to time-domain concatenation on the first signal and the second signal of the same type (e.g., the same layer or the same user). As shown in FIG. 24, taking multi-layer transmission as an example, assuming that the first data signal includes first signals of two layers and the second data signal includes second signals of two layers, time-domain concatenation may be performed on the first signal of the first layer processed by the sixth model and the second signal of the first layer processed by the seventh model to obtain a first concatenated signal. Time-domain concatenation may be performed on the first signal of the second layer processed by the sixth model and the second signal of the second layer processed by the seventh model to obtain a second concatenated signal. The fifth model may be used to process the first concatenated signal and the second concatenated signal. For example, the fifth model may be used to process the first concatenated signal to obtain a nonlinearly superposed signal of the first layer. The fifth model may be used to process the second concatenated signal to obtain a nonlinearly superposed signal of the second layer.

In some embodiments, the first processing operation may include processing of the sixth model, processing of the seventh model, and channel concatenation. For example, the multiple first signals may be processed using the sixth model to obtain multiple processed first signals, and the multiple second signals may be processed using the seventh model to obtain multiple processed second signals. Channel concatenation is performed on the multiple processed first signals and the multiple processed second signals to obtain multiple concatenated signals. The fifth model may be used to perform the nonlinear superposition on the multiple concatenated signals respectively, to obtain multiple nonlinearly superposed signals.

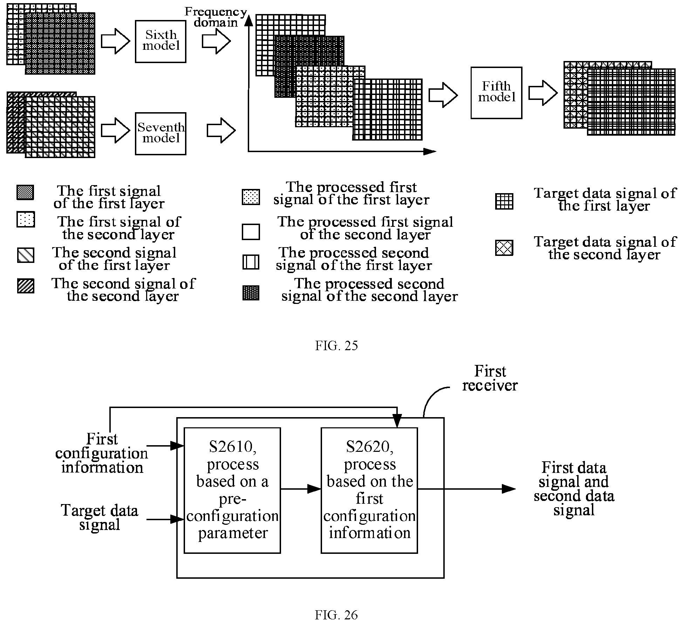

The above channel concatenation may refer to performing channel concatenation on the first signal and the second signal of the same type (e.g., the same layer or the same user). As shown in FIG. 25, taking multi-layer transmission as an example, assuming that the first data signal includes first signals of two layers and the second data signal includes second signals of two layers, channel concatenation may be performed on the first signal of the first layer processed by the sixth model and the second signal of the first layer processed by the seventh model to obtain a first concatenated signal. Channel concatenation may be performed on the first signal of the second layer processed by the sixth model and the second signal of the second layer processed by the seventh model to obtain a second concatenated signal. The fifth model may be used to process the first concatenated signal and the second concatenated signal. For example, the fifth model may be used to process the first concatenated signal to obtain a nonlinearly superposed signal of the first layer. The fifth model may be used to process the second concatenated signal to obtain a nonlinearly superposed signal of the second layer.

The above takes multi-layer transmission as an example to introduce the processing scheme for multiple first signals and multiple second signals. It may be understood that the scheme for multi-user transmission is similar to that for multi-layer transmission. For brevity, it is not repeated here. For example, the first signals of the multiple layers above may be replaced with the first signals for multiple users, and the second signals of the multiple layers may be replaced with the second signals for multiple users.

### Receiver

In some embodiments, the second device may include a first receiver. The second device may receive the target data signal through the first receiver. The first receiver may be configured to recover the first data signal and the second data signal in the target data signal. For example, the first receiver may be configured to process the target data signal to obtain the first data signal and the second data signal.

The embodiments of the present disclosure do not specifically limit the type of the first receiver. For example, the first receiver may be an AI receiver. As another example, the first receiver may be an ML (machine learning) receiver.

In some implementations, the first receiver may be configured to recover the first data signal and the second data signal based on first configuration information.

In some embodiments, the input of the first receiver may include the first configuration information and the target data signal, as shown in FIG. 26. The output of the first receiver may be determined according to a function of a model in the first receiver. For example, the output of the first receiver may be a log likelihood ratio or a received bit stream.

The embodiments of the present disclosure do not specifically limit the first configuration information. The first configuration information is related to a superposition of the first data signal and the second data signal. For example, the first configuration information may include one or more of the following information: a number of transmission layers, a number of users for the transmission, a transmission bandwidth, a first parameter (or an index of the first parameter), a second parameter (or an index of the second parameter), a third statistical distribution characteristic corresponding to the first data signal, and a fourth statistical distribution characteristic corresponding to the second data signal.

The first parameter may be the first parameter described above, that is, the first parameter may be configured to adjust transmission energy of the first data signal; the second parameter may be the second parameter described above, that is, the second parameter may be configured to adjust transmission energy of the second data signal.

In some embodiments, the third statistical distribution characteristic may include one or more of: a modulation scheme, a coding scheme, and an information source type. The fourth statistical distribution characteristic may include one or more of: a modulation scheme, a coding scheme, and an information source type.

In some implementations, if there is a linear superposition on the first data signal and the second data signal, the first configuration information may include the third statistical distribution characteristic and the fourth statistical distribution characteristic. If there is no linear superposition on the first data signal and the second data signal, the first configuration information may not include the third statistical distribution characteristic and the fourth statistical distribution characteristic. Of course, in some implementations, regardless of whether there is a linear superposition on the first data signal and the second data signal, the first configuration information may include the third statistical distribution characteristic and the fourth statistical distribution characteristic, which may enable the first configuration information to adapt to different scenarios, to unify the input of the first receiver and reduce complexity of the first receiver.

In some embodiments, the first configuration information may include two types of information. First-type information has an impact on a model structure and an output dimension in the first receiver, and second-type information does not have an impact on the model structure and the output dimension. The first-type information may include, for example, one or more of: a modulation scheme, a number of transmission layers, a number of users for the transmission, and a transmission bandwidth. The second-type information may include one or more of: the first parameter, the second parameter, the coding scheme, and the information source type.

In some embodiments, the first receiver may process the target data signal based on a preconfigured parameter to obtain a first processed signal (as shown in step S2610 in FIG. 26), and process the first processed signal based on the first configuration information to obtain a second processed signal (as shown in step S2620 in FIG. 26). The second device may recover the first data signal and the second data signal based on the second processed signal. A dimension of the second processed signal is less than a dimension of the first processed signal. In some implementations, processing the first processed signal may be understood as cropping the first processed signal. For example, the first receiver may crop the first processed signal based on the first configuration information.

In some embodiments, the preconfigured parameter may include the first-type information described above. The preconfigured parameter may be a maximum parameter configured by the system. For example, the preconfigured parameter may include one or more of: a maximum number of transmission layers, a maximum bandwidth, and a maximum modulation order corresponding to a modulation scheme (such as Modulation and coding scheme (MCS)). The first receiver may process the target data signal based on the first configuration information, and output according to the maximum parameter (such as the maximum number of transmission layers, the maximum bandwidth, and the maximum modulation order corresponding to MCS), to obtain the first processed signal. Furthermore, the first receiver may crop the first processed signal according to the first configuration information to obtain demodulation information conforming to the first configuration information, which enables the first receiver to adapt to data signals of different layer numbers, different bandwidths, and different modulation schemes, enables a generalized design for the first receiver, and reduces design complexity of the first receiver.

The processing manner of the first receiver is described in detail below by taking examples in which the first configuration information is MCS and the number of transmission layers respectively.

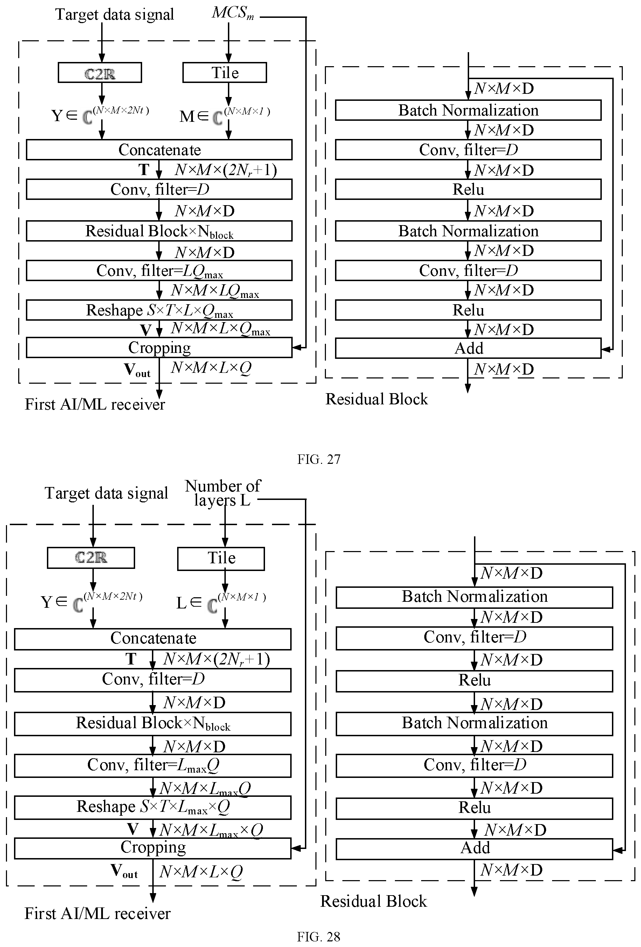

FIG. 27 illustrates a scheme where the first configuration information includes MCS. It is assumed that resource units allocated by the system are N subcarriers × M time-domain symbols (or OFDM (Orthogonal Frequency Division Multiplexing) symbols), a modulation order corresponding to a preconfigured MCS is m, and the number of transmission layers is L. A model structure of the first receiver may be as shown in FIG. 27. The structure may have a residual convolutional network with a number of convolution kernels of D and a number of residual blocks of *N*_{block}, as a main backbone. Of course, the first receiver may also have the network structure described above or other network structures as a basic backbone, which is not specifically limited in the embodiments of the present disclosure.

The input of the model may include an MCS index m indicating a coding and modulation scheme, the index m may be auxiliary information to guide the model to process a signal configured by a target MCS, and a scalar m is duplicated and tiled into an MCS information tensor **M**∈*C*^{*N*×*M*×1}. To facilitate signal processing of the model, the received signal in a complex-number form (i.e., the target data signal) may be converted into a tensor in a real-number form **Y**∈*C*^{*N×M×*2*N*ᵣ}. The MCS information tensor and the received signal tensor are concatenated to obtain a feature map **T**∈*C*^{*N*×*M*×(2*N*ᵣ+1)} to send to the subsequent residual convolutional network for processing. The first receiver, after processing the signal, outputs a log likelihood ratio tensor **V**∈*C*^{*N*×*M*×*L*×*Q*ₘₐₓ}, where *Q*ₘₐₓ represents a maximum number of bits per symbol corresponding to a maximum modulation order in all possibly-configured MCS types that is supported by the system. In addition, a last dimension of the tensor **V**∈*C*^{*N*×*M*×*L*×*Q*ₘₐₓ} may be cropped according to a currently set MCS (e.g., the MCS in the first configuration information), to obtain a final output log likelihood ratio tensor **V**ₒᵤₜ∈*C*^{*N*×*M*×*L*×*Q*} to send to the subsequent channel decoding module, where *Q* represents a number of bits per symbol corresponding to a modulation order of the configured MCS.

FIG. 28 illustrates a scheme where the first configuration information includes the number of transmission layers. It is assumed that resource units allocated by the system are N subcarriers × M time-domain symbols (or OFDM symbols), a modulation order corresponding to a preconfigured MCS is m, and the number of transmission layers is L. A model structure of the first receiver may be as shown in FIG. 28. The structure may have a residual convolutional network with a number of convolution kernels of D and a number of residual blocks of *N*_{block}, as a main backbone. Of course, the first receiver may also have the network structure described above or other network structures as a basic backbone, which is not specifically limited in the embodiments of the present disclosure.

The input of the model may include the number of transmission layers L configured by the system, the number of transmission layers L may be auxiliary information to guide the model to process signals of a target number of transmission layers. A scalar L is duplicated and tiled into a layer number information tensor **L**∈*C*^{*N*×*M*×1}. To facilitate signal processing of the model, the received signal in a complex-number form (e.g., the target data signal) is converted into a tensor in a real-number form **Y**∈*C*^{*N*×*M*×2*N*ᵣ}. In addition, the layer number information tensor and the received signal tensor may be concatenated to obtain a feature map **T**∈*C*^{*N*×*M*×(2*N*ᵣ+1)}. The feature map is sent to the subsequent residual network for processing. The first receiver, after processing the signal, outputs a log likelihood ratio tensor **V**∈*C*^{*N*×*M*×*L*ₘₐₓ×*Q*}, where *Q* represents a number of bits per symbol corresponding to an MCS configured by the system, and *L*ₘₐₓ represents a maximum number of transmission layers that can be supported by the system. In some implementations, a third dimension of the tensor **V**∈*C*^{*N*×*M*×*L*ₘₐₓ×*Q*} may be cropped according to the number of transmission layers L in the first configuration information, to obtain a final output log likelihood ratio tensor **V**ₒᵤₜ∈*C*^{*N*×*M*×*L*×*Q*} to send to the subsequent channel decoding module.

It should be noted that, in some embodiments, the aforementioned first parameter may be replaced with a first weight, and the second parameter may be replaced with a second weight.

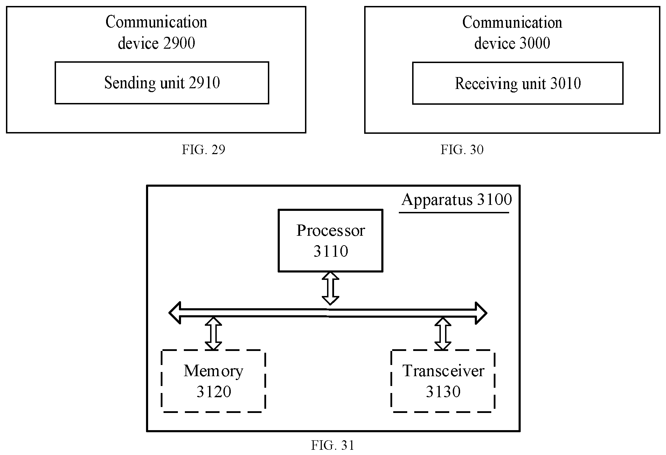

The method embodiments of the present disclosure have been described in detail above in conjunction with FIG. 1 to FIG. 28; apparatus embodiments of the present disclosure are described in detail below in conjunction with FIG. 29 to FIG. 31. It should be understood that descriptions of the method embodiments correspond to descriptions of the apparatus embodiments, therefore, parts not described in detail may refer to the above method embodiments.

FIG. 29 is a schematic block diagram of a communication device provided in the embodiments of the present disclosure. The communication device 2900 shown in FIG. 29 may be any first device described above. The communication device 2900 includes a sending unit 2910.

The sending unit 2910 is configured to send a target data signal to a second device, where the target data signal is generated based on a first data signal and a second data signal, a transmission resource occupied by the first data signal includes a first resource, the first resource is also used for transmitting part or all of data signals in the second data signal, and the first resource includes at least two of resources as follows: a time-domain resource, a frequency-domain resource, and a spatial-domain resource.

In some possible implementations, the target data signal is generated based on a linear superposition of the first data signal and the second data signal.

In some possible implementations, the linear superposition of the first data signal and the second data signal is performed based on one or more of: a symbol set corresponding to the first data signal; a symbol set corresponding to the second data signal; a first parameter, the first parameter being used for adjusting transmission energy of the first data signal; a second parameter, the second parameter being used for adjusting transmission energy of the second data signal.

In some possible implementations, the first parameter is determined based on a first model, or the first parameter is a preconfigured parameter.

In some possible implementations, the second parameter is determined based on a second model, or the second parameter is a preconfigured parameter.

In some possible implementations, the symbol set corresponding to the first data signal is determined based on a third model, or the symbol set corresponding to the first data signal is a preset symbol set.

In some possible implementations, the symbol set corresponding to the second data signal is determined based on a fourth model, or the symbol set corresponding to the second data signal is a preset symbol set.

In some possible implementations, the first data signal and the second data signal have different first statistical distribution characteristics.

In some possible implementations, the first statistical distribution characteristic includes one or more of: a modulation scheme, a coding scheme, and an information source type.

In some possible implementations, the first data signal includes multiple first signals, the multiple first signals correspond to multiple second devices, or the multiple first signals correspond to multiple transmission layers of the first device; where the second data signal includes multiple second signals, the multiple second signals correspond to multiple second devices, or the multiple second signals correspond to multiple transmission layers of the first device; the linear superposition of the first data signal and the second data signal is performed by: linearly superposing a first signal and a second signal of a same layer; or linearly superposing a first signal and a second signal for a same second device.

In some possible implementations, the multiple first signals have different second statistical distribution characteristics.

In some possible implementations, the second statistical distribution characteristic includes one or more of: a modulation scheme, a coding scheme, an information source type, a first parameter, and a second parameter, where the first parameter is used for adjusting transmission energy of the first signal, and the second parameter is used for adjusting transmission energy of the second signal.

In some possible implementations, the target data signal is generated based on a nonlinear superposition of the first data signal and the second data signal.

In some possible implementations, the target data signal is generated by performing the nonlinear superposition on the first data signal and the second data signal by using a fifth model.

In some possible implementations, the fifth model is used for performing the nonlinear superposition on a processed data signal, and the processed data signal is obtained by a first processing operation on the first data signal and the second data signal.

In some possible implementations, the first processing operation includes one or more of: a concatenation operation, a linear superposition, processing of a sixth model, and processing of a seventh model; where the sixth model is used for processing the first data signal, and the seventh model is used for processing the second data signal.

In some possible implementations, the concatenation operation includes one or more of: concatenating a transmission resource occupied by the first data signal and a transmission resource occupied by the second data signal in time domain; concatenating a transmission resource occupied by the first data signal and a transmission resource occupied by the second data signal in frequency domain; concatenating based on an input channel of the first data signal and an input channel of the second data signal.

In some possible implementations, the first data signal includes multiple first signals, the second data signal includes multiple second signals, the sixth model is used for processing the multiple first signals, and the seventh model is used for processing the multiple second signals.

FIG. 30 is a schematic block diagram of a communication device provided in the embodiments of the present disclosure. The communication device 3000 shown in FIG. 30 may be any second device described above. The communication device 3000 includes a receiving unit 3010.

The receiving unit 3010 is configured to receive a target data signal sent from a first device, where the target data signal is generated based on a first data signal and a second data signal, a transmission resource occupied by the first data signal includes a first resource, the first resource is also used for transmitting part or all of data signals in the second data signal, and the first resource includes at least two of resources as follows: a time-domain resource, a frequency-domain resource, and a spatial-domain resource.

In some possible implementations, the target data signal is generated based on a linear superposition of the first data signal and the second data signal.

In some possible implementations, the linear superposition of the first data signal and the second data signal is performed based on one or more of: a symbol set corresponding to the first data signal; a symbol set corresponding to the second data signal; a first parameter, the first parameter being used for adjusting transmission energy of the first data signal; a second parameter, the second parameter being used for adjusting transmission energy of the second data signal.

In some possible implementations, the first parameter is determined based on a first model, or the first parameter is a preconfigured parameter.

In some possible implementations, the second parameter is determined based on a second model, or the second parameter is a preconfigured parameter.

In some possible implementations, the symbol set corresponding to the first data signal is determined based on a third model, or the symbol set corresponding to the first data signal is a preset symbol set.

In some possible implementations, the symbol set corresponding to the second data signal is determined based on a fourth model, or the symbol set corresponding to the second data signal is a preset symbol set.

In some possible implementations, the first data signal and the second data signal have different first statistical distribution characteristics.

In some possible implementations, the first statistical distribution characteristic includes one or more of: a modulation scheme, a coding scheme, and an information source type.

In some possible implementations, the first data signal includes multiple first signals, the multiple first signals correspond to multiple second devices, or the multiple first signals correspond to multiple transmission layers of the first device; where the second data signal includes multiple second signals, the multiple second signals correspond to multiple second devices, or the multiple second signals correspond to multiple transmission layers of the first device; the linear superposition of the first data signal and the second data signal is performed by: linearly superposing a first signal and a second signal of a same layer; or linearly superposing a first signal and a second signal for a same second device.

In some possible implementations, the multiple first signals have different second statistical distribution characteristics.

In some possible implementations, the second statistical distribution characteristic includes one or more of: a modulation scheme, a coding scheme, an information source type, a first parameter, and a second parameter, where the first parameter is used for adjusting transmission energy of the first signal, and the second parameter is used for adjusting transmission energy of the second signal.

In some possible implementations, the target data signal is generated based on a nonlinear superposition of the first data signal and the second data signal.

In some possible implementations, the target data signal is generated by performing the nonlinear superposition on the first data signal and the second data signal by using a fifth model.

In some possible implementations, the fifth model is used for performing the nonlinear superposition on a processed data signal, and the processed data signal is obtained by a first processing operation on the first data signal and the second data signal.

In some possible implementations, the first processing operation includes one or more of: a concatenation operation, a linear superposition, processing of a sixth model, and processing of a seventh model; where the sixth model is used for processing the first data signal, and the seventh model is used for processing the second data signal.

In some possible implementations, the concatenation operation includes one or more of: concatenating a transmission resource occupied by the first data signal and a transmission resource occupied by the second data signal in time domain; concatenating a transmission resource occupied by the first data signal and a transmission resource occupied by the second data signal in frequency domain; concatenating based on an input channel of the first data signal and an input channel of the second data signal.

In some possible implementations, the first data signal includes multiple first signals, the second data signal includes multiple second signals, the sixth model is used for processing the multiple first signals, and the seventh model is used for processing the multiple second signals.

In some possible implementations, the receiving unit is configured to: receive the target data signal by using a first receiver, where the first receiver is used to recover the first data signal and the second data signal in the target data signal.

In some possible implementations, the first receiver is used to recover the first data signal and the second data signal based on first configuration information.

In some possible implementations, the communication device further includes: a processing unit, configured to process the target data signal based on a preconfigured parameter, to obtain a first processed signal, and process the first processed signal, to obtain a second processed signal, where a dimension of the second processed signal is smaller than a dimension of the first processed signal; a recovery unit, configured to recover the first data signal and the second data signal based on the second processed signal.

In some possible implementations, the first configuration information includes one or more of: a number of transmission layers, a number of users for transmission, a transmission bandwidth, a first parameter, a second parameter, and a third statistical distribution characteristic; where the first parameter is used for adjusting transmission energy of the first data signal, and the second parameter is used for adjusting transmission energy of the second data signal.

In some possible implementations, the third statistical distribution characteristic includes one or more of: a modulation scheme, a coding scheme, and an information source type.

FIG. 31 is a schematic structure diagram of a communication apparatus (or a communication device) of the embodiments of the present disclosure. In FIG. 31, dashed lines indicate that the unit or module is optional. The apparatus 3100 may be configured to implement the method described in the above method embodiments. The apparatus 3100 may be a chip, a communication device, a first device, or a second device.

In some embodiments, the apparatus 3100 shown in FIG. 31 may be a first device. The apparatus may include a memory, a processor, and a transceiver, where the memory is configured to store a program, the processor is configured to invoke the program in the memory, and the transceiver is configured to send a target data signal to a second device, where the target data signal is generated based on a first data signal and a second data signal, a transmission resource occupied by the first data signal includes a first resource, the first resource is also used for transmitting part or all of data signals in the second data signal, and the first resource includes at least two of resources as follows: a time-domain resource, a frequency-domain resource, and a spatial-domain resource.

In some possible implementations, the target data signal is generated based on a linear superposition of the first data signal and the second data signal.

In some possible implementations, the linear superposition of the first data signal and the second data signal is performed based on one or more of: a symbol set corresponding to the first data signal; a symbol set corresponding to the second data signal; a first parameter, the first parameter being used for adjusting transmission energy of the first data signal; a second parameter, the second parameter being used for adjusting transmission energy of the second data signal.

In some possible implementations, the first parameter is determined based on a first model, or the first parameter is a preconfigured parameter.

In some possible implementations, the second parameter is determined based on a second model, or the second parameter is a preconfigured parameter.

In some possible implementations, the symbol set corresponding to the first data signal is determined based on a third model, or the symbol set corresponding to the first data signal is a preset symbol set.

In some possible implementations, the symbol set corresponding to the second data signal is determined based on a fourth model, or the symbol set corresponding to the second data signal is a preset symbol set.

In some possible implementations, the first data signal and the second data signal have different first statistical distribution characteristics.

In some possible implementations, the first statistical distribution characteristic includes one or more of: a modulation scheme, a coding scheme, and an information source type.

In some possible implementations, the first data signal includes multiple first signals, the multiple first signals correspond to multiple second devices, or the multiple first signals correspond to multiple transmission layers of the first device; where the second data signal includes multiple second signals, the multiple second signals correspond to multiple second devices, or the multiple second signals correspond to multiple transmission layers of the first device; the linear superposition of the first data signal and the second data signal is performed by: linearly superposing a first signal and a second signal of a same layer; or linearly superposing a first signal and a second signal for a same second device.

In some possible implementations, the multiple first signals or the multiple second signals have different second statistical distribution characteristics.

In some possible implementations, the second statistical distribution characteristic includes one or more of: a modulation scheme, a coding scheme, an information source type, a first parameter, and a second parameter, where the first parameter is used for adjusting transmission energy of the first signal, and the second parameter is used for adjusting transmission energy of the second signal.

In some possible implementations, the target data signal is generated based on a nonlinear superposition of the first data signal and the second data signal.

In some possible implementations, the target data signal is generated by performing the nonlinear superposition on the first data signal and the second data signal by using a fifth model.

In some possible implementations, the fifth model is used for performing the nonlinear superposition on a processed data signal, and the processed data signal is obtained by a first processing operation on the first data signal and the second data signal.

In some possible implementations, the first processing operation includes one or more of: a concatenation operation, a linear superposition, processing of a sixth model, and processing of a seventh model; where the sixth model is used for processing the first data signal, and the seventh model is used for processing the second data signal.

In some possible implementations, the concatenation operation includes one or more of: concatenating a transmission resource occupied by the first data signal and a transmission resource occupied by the second data signal in time domain; concatenating a transmission resource occupied by the first data signal and a transmission resource occupied by the second data signal in frequency domain; concatenating based on an input channel of the first data signal and an input channel of the second data signal.

In some possible implementations, the first data signal includes multiple first signals, the second data signal includes multiple second signals, the sixth model is used for processing the multiple first signals, and the seventh model is used for processing the multiple second signals.

In some embodiments, the apparatus 3100 shown in FIG. 31 may be a second device. The apparatus may include a memory, a processor, and a transceiver, where the memory is configured to store a program, the processor is configured to invoke the program in the memory, and the transceiver is configured to: receive a target data signal sent from a first device, where the target data signal is generated based on a first data signal and a second data signal, a transmission resource occupied by the first data signal includes a first resource, the first resource is also used for transmitting part or all of data signals in the second data signal, and the first resource includes at least two of resources as follows: a time-domain resource, a frequency-domain resource, and a spatial-domain resource.

In some possible implementations, the target data signal is generated based on a linear superposition of the first data signal and the second data signal.

In some possible implementations, the linear superposition of the first data signal and the second data signal is performed based on one or more of: a symbol set corresponding to the first data signal; a symbol set corresponding to the second data signal; a first parameter, the first parameter being used for adjusting transmission energy of the first data signal; a second parameter, the second parameter being used for adjusting transmission energy of the second data signal.

In some possible implementations, the first parameter is determined based on a first model, or the first parameter is a preconfigured parameter.

In some possible implementations, the second parameter is determined based on a second model, or the second parameter is a preconfigured parameter.

In some possible implementations, the symbol set corresponding to the first data signal is determined based on a third model, or the symbol set corresponding to the first data signal is a preset symbol set.

In some possible implementations, the symbol set corresponding to the second data signal is determined based on a fourth model, or the symbol set corresponding to the second data signal is a preset symbol set.

In some possible implementations, the first data signal and the second data signal have different first statistical distribution characteristics.

In some possible implementations, the first statistical distribution characteristic includes one or more of: a modulation scheme, a coding scheme, and an information source type.

In some possible implementations, the first data signal includes multiple first signals, the multiple first signals correspond to multiple second devices, or the multiple first signals correspond to multiple transmission layers of the first device; where the second data signal includes multiple second signals, the multiple second signals correspond to multiple second devices, or the multiple second signals correspond to multiple transmission layers of the first device; the linear superposition of the first data signal and the second data signal is performed by: linearly superposing a first signal and a second signal of a same layer; or linearly superposing a first signal and a second signal for a same second device.

In some possible implementations, the multiple first signals have different second statistical distribution characteristics.

In some possible implementations, the second statistical distribution characteristic includes one or more of: a modulation scheme, a coding scheme, an information source type, a first parameter, and a second parameter, where the first parameter is used for adjusting transmission energy of the first signal, and the second parameter is used for adjusting transmission energy of the second signal.

In some possible implementations, the target data signal is generated based on a nonlinear superposition of the first data signal and the second data signal.

In some possible implementations, the target data signal is generated by performing the nonlinear superposition on the first data signal and the second data signal by using a fifth model.

In some possible implementations, the fifth model is used for performing the nonlinear superposition on a processed data signal, and the processed data signal is obtained by a first processing operation on the first data signal and the second data signal.

In some possible implementations, the first processing operation includes one or more of: a concatenation operation, a linear superposition, processing of a sixth model, and processing of a seventh model; where the sixth model is used for processing the first data signal, and the seventh model is used for processing the second data signal.

In some possible implementations, the concatenation operation includes one or more of: concatenating a transmission resource occupied by the first data signal and a transmission resource occupied by the second data signal in time domain; concatenating a transmission resource occupied by the first data signal and a transmission resource occupied by the second data signal in frequency domain; concatenating based on an input channel of the first data signal and an input channel of the second data signal.

In some possible implementations, the first data signal includes multiple first signals, the second data signal includes multiple second signals, the sixth model is used for processing the multiple first signals, and the seventh model is used for processing the multiple second signals.

In some possible implementations, receiving, by the second device, the target data signal sent from the first device, includes: receiving, by the second device by using a first receiver, the target data signal, where the first receiver is used to recover the first data signal and the second data signal in the target data signal.

In some possible implementations, the first receiver is used to recover the first data signal and the second data signal based on first configuration information.

In some possible implementations, the processor is configured to: process the target data signal based on a preconfigured parameter, to obtain a first processed signal; process the first processed signal based on the first configuration information, to obtain a second processed signal, where a dimension of the second processed signal is smaller than a dimension of the first processed signal; recover the first data signal and the second data signal based on the second processed signal.

In some possible implementations, the first configuration information includes one or more of: a number of transmission layers, a number of users for transmission, a transmission bandwidth, a first parameter, a second parameter, a third statistical distribution characteristic corresponding to the first data signal, and a fourth statistical distribution characteristic corresponding to the second data signal; where the first parameter is used for adjusting transmission energy of the first data signal, and the second parameter is used for adjusting transmission energy of the second data signal.

In some possible implementations, the third statistical distribution characteristic and/or the fourth statistical distribution characteristic includes one or more of: a modulation scheme, a coding scheme, and an information source type.

Continuing to refer to FIG. 31, the apparatus 3100 may include one or more processors 3110. The processor 3110 may support the apparatus 3100 to implement the method described in the above method embodiments. The processor 3110 may be a general-purpose processor or a special-purpose processor. For example, the processor may be a central processing unit (CPU). Alternatively, the processor may also be another general-purpose processor, a digital signal processor (DSP), an application specific integrated circuit (ASIC), a field programmable gate array (FPGA), or another programmable logic device, a discrete gate or transistor logic device, a discrete hardware component, etc. A general-purpose processor may be a microprocessor, or the processor may also be any conventional processor, etc.

The apparatus 3100 may further include one or more memories 3120. A program is stored on the memory 3120, and the program may be executed by the processor 3110, so that the processor 3110 performs the method described in the above method embodiments. The memory 3120 may be independent of the processor 3110 or integrated in the processor 3110.

The apparatus 3100 may further include a transceiver 3130. The processor 3110 may communicate with other devices or chips through the transceiver 3130. For example, the processor 3110 may perform data transmission and reception with other devices or chips through the transceiver 3130.

The embodiments of the present disclosure further provide a computer-readable storage medium, for storing a program. The computer-readable storage medium may be applied to the first device or the second device provided in the embodiments of the present disclosure, and the program enables a computer to perform the method performed by the first device or the second device in the various embodiments of the present disclosure.

The embodiments of the present disclosure further provide a computer program product. The computer program product includes a program. The computer program product may be applied to the first device or the second device provided in the embodiments of the present disclosure, and the program enables a computer to perform the method performed by the first device or the second device in the various embodiments of the present disclosure.

The embodiments of the present disclosure further provide a computer program. The computer program may be applied to the first device or the second device provided in the embodiments of the present disclosure, and the computer program enables a computer to perform the method performed by the first device or the second device in the various embodiments of the present disclosure.

It should be understood that the terms "system" and "network" in the present disclosure may be used interchangeably. In addition, the terms used in the present disclosure are only for explaining the specific embodiments of the present disclosure, and are not intended to limit the present disclosure. The terms "first", "second", "third", and "fourth", etc., in the specification and claims and the drawings of the present disclosure are used to distinguish different objects, rather than to describe a specific order. In addition, the terms "include" and "have" and any variations thereof are intended to cover non-exclusive inclusion.

In the embodiments of the present disclosure, the mentioned "indication" may be direct indication, indirect indication, or represent that there is an association relationship. For example, A indicating B may mean that A directly indicates B, for example, B may be acquired through A; or may mean that A indirectly indicates B, for example, A indicates C, and B may be acquired through C; or may mean that there is an association relationship between A and B.

In the embodiments of the present disclosure, the mentioned "including" may refer to direct including or indirect including. Optionally, the "including" mentioned in the embodiments of the present disclosure may be replaced with "indicating" or "used to determine". For example, A including B may be replaced with A indicating B, or A being used to determine B.

In the embodiments of the present disclosure, "B corresponding to A" indicates that B is associated with A, and B may be determined according to A. But it should also be understood that determining B according to A does not mean that B is determined according to A only, and B may also be determined according to A and/or other information.

In the embodiments of the present disclosure, the term "corresponding to" may indicate a direct corresponding or indirect corresponding relationship between two items, may also indicate an association relationship between the two items, or may indicate a relationship such as indicating and being indicated, configuring and being configured, or the like.

In the embodiments of the present disclosure, "predefined" or "preconfigured" may be implemented by pre-storing a corresponding code, table, or other means that may be used to indicate related information in a device (for example, including a terminal device and a network device), and the present disclosure does not limit the specific implementation thereof. For example, the predefined may refer to being defined in a protocol.

In the embodiments of the present disclosure, the "protocol" may refer to a standard protocol in the communication field, for example, which may include an LTE protocol, an NR protocol, and related protocols applied in future communication systems, and the present disclosure does not limit this.

In the embodiments of the present disclosure, the term "and/or" is only a description for an association relationship of associated objects, indicating that three relationships may exist; for example, A and/or B may represent that: A exists alone, A and B exist simultaneously, or B exists alone. In addition, the character "/" herein generally indicates that the associated objects before and after "/" are in an "or" relationship.

In various embodiments of the present disclosure, the size of the sequence numbers of the above processes does not mean an order of execution; the execution order of the processes should be determined by their functions and internal logic, and should not impose any limitation on the implementation process of the embodiments of the present disclosure.

In several embodiments provided in the present disclosure, it should be understood that the disclosed system, apparatus, and method may be implemented in other ways. For example, the apparatus embodiments described above are only illustrative; for example, the division of the units is only a logical functional division, and in actual implementations, there may be other divisions, for example, multiple units or components may be combined or integrated into another system, or some features may be ignored or not performed. In addition, the coupling or direct coupling or communication connection between each other as shown or discussed may be an indirect coupling or communication connection through some interfaces, apparatuses, or units, which may be in an electrical, mechanical, or other forms.

The units described as separate components may be or may not be physically separate, and the components shown as units may be or may not be physical units; that is, they may be located in one place or distributed over multiple network units. Some or all of the units may be selected according to actual needs to achieve the purpose of the scheme of the embodiments.

In addition, in various embodiments of the present disclosure, various functional units may be integrated into a processing unit, or various units may exist separately and physically, or two or more units may be integrated into a unit.

In the above embodiments, they may be implemented entirely or partially through software, hardware, firmware, or any combination thereof. When implemented by using software, it may be implemented entirely or partially in the form of a computer program product. The computer program product includes one or more computer instructions. When the computer program instructions are loaded and executed on a computer, the processes or functions described in the embodiments of the present disclosure are generated entirely or partially. The computer may be a general-purpose computer, a special-purpose computer, a computer network, or another programmable apparatus. The computer instructions may be stored in a computer-readable storage medium or transmitted from one computer-readable storage medium to another computer-readable storage medium; for example, the computer instructions may be transmitted from one website site, computer, server, or data center to another website site, computer, server, or data center in a wired (e.g., coaxial cable, optical fiber, digital subscriber line (DSL)) or wireless (e.g., infrared, wireless, microwave, etc.) manner. The computer-readable storage medium may be any available medium that can be read by a computer, or a data storage device such as a server or data center that integrates one or more available media. The available medium may be a magnetic medium (for example, floppy disk, hard disk, magnetic tape), an optical medium (for example, digital video disc (DVD)), or a semiconductor medium (for example, solid state disk (SSD)), etc.

The above descriptions are only specific implementations of the present disclosure, but the protection scope of the present disclosure is not limited thereto; any person skilled in the art may easily think of variations or replacements within the technical scope disclosed in the present disclosure, all of which should be covered within the protection scope of the present disclosure. Therefore, the protection scope of the present disclosure should be based on the protection scope of the claims.

## Claims

1. A data transmission method, comprising:
sending, by a first device, a target data signal to a second device, wherein the target data signal is generated based on a first data signal and a second data signal, a transmission resource occupied by the first data signal comprises a first resource, the first resource is also used for transmitting part or all of data signals in the second data signal, and the first resource comprises at least two of resources as follows: a time-domain resource, a frequency-domain resource, and a spatial-domain resource.

2. The method according to claim 1, wherein the target data signal is generated based on a linear superposition of the first data signal and the second data signal.

3. The method according to claim 2, wherein the linear superposition of the first data signal and the second data signal is performed based on one or more of:
a symbol set corresponding to the first data signal;
a symbol set corresponding to the second data signal;
a first parameter, the first parameter being used for adjusting transmission energy of the first data signal;
a second parameter, the second parameter being used for adjusting transmission energy of the second data signal.

4. The method according to claim 3, wherein the first parameter is determined based on a first model, or the first parameter is a preconfigured parameter.

5. The method according to claim 3 or 4, wherein the second parameter is determined based on a second model, or the second parameter is a preconfigured parameter.

6. The method according to any one of claims 3 to 5, wherein the symbol set corresponding to the first data signal is determined based on a third model, or the symbol set corresponding to the first data signal is a preset symbol set.

7. The method according to any one of claims 3 to 6, wherein the symbol set corresponding to the second data signal is determined based on a fourth model, or the symbol set corresponding to the second data signal is a preset symbol set.

8. The method according to any one of claims 2 to 7, wherein the first data signal and the second data signal have different first statistical distribution characteristics.

9. The method according to claim 8, wherein the first statistical distribution characteristic comprises one or more of: a modulation scheme, a coding scheme, and an information source type.

10. The method according to any one of claims 2 to 9, wherein the first data signal comprises multiple first signals, the multiple first signals correspond to multiple second devices, or the multiple first signals correspond to multiple transmission layers of the first device; wherein the second data signal comprises multiple second signals, the multiple second signals correspond to multiple second devices, or the multiple second signals correspond to multiple transmission layers of the first device;
the linear superposition of the first data signal and the second data signal is performed by:
linearly superposing a first signal and a second signal of a same layer; or
linearly superposing a first signal and a second signal for a same second device.

11. The method according to claim 10, wherein the multiple first signals or the multiple second signals have different second statistical distribution characteristics.

12. The method according to claim 11, wherein the second statistical distribution characteristic comprises one or more of: a modulation scheme, a coding scheme, an information source type, a first parameter, and a second parameter, wherein the first parameter is used for adjusting transmission energy of the first signal, and the second parameter is used for adjusting transmission energy of the second signal.

13. The method according to claim 1, wherein the target data signal is generated based on a nonlinear superposition of the first data signal and the second data signal.

14. The method according to claim 13, wherein the target data signal is generated by performing the nonlinear superposition on the first data signal and the second data signal by using a fifth model.

15. The method according to claim 14, wherein the fifth model is used for performing the nonlinear superposition on a processed data signal, and the processed data signal is obtained by a first processing operation on the first data signal and the second data signal.

16. The method according to claim 15, wherein the first processing operation comprises one or more of: a concatenation operation, a linear superposition, processing of a sixth model, and processing of a seventh model;
wherein the sixth model is used for processing the first data signal, and the seventh model is used for processing the second data signal.

17. The method according to claim 16, wherein the concatenation operation comprises one or more of:
concatenating a transmission resource occupied by the first data signal and a transmission resource occupied by the second data signal in time domain;
concatenating a transmission resource occupied by the first data signal and a transmission resource occupied by the second data signal in frequency domain;
concatenating based on an input channel of the first data signal and an input channel of the second data signal.

18. The method according to claim 16 or 17, wherein the first data signal comprises multiple first signals, the second data signal comprises multiple second signals, the sixth model is used for processing the multiple first signals, and the seventh model is used for processing the multiple second signals.

19. A data transmission method, comprising:
receiving, by a second device, a target data signal sent from a first device, wherein the target data signal is generated based on a first data signal and a second data signal, a transmission resource occupied by the first data signal comprises a first resource, the first resource is also used for transmitting part or all of data signals in the second data signal, and the first resource comprises at least two of resources as follows: a time-domain resource, a frequency-domain resource, and a spatial-domain resource.

20. The method according to claim 19, wherein the target data signal is generated based on a linear superposition of the first data signal and the second data signal.

21. The method according to claim 20, wherein the linear superposition of the first data signal and the second data signal is performed based on one or more of:
a symbol set corresponding to the first data signal;
a symbol set corresponding to the second data signal;
a first parameter, the first parameter being used for adjusting transmission energy of the first data signal;
a second parameter, the second parameter being used for adjusting transmission energy of the second data signal.

22. The method according to claim 21, wherein the first parameter is determined based on a first model, or the first parameter is a preconfigured parameter.

23. The method according to claim 21 or 22, wherein the second parameter is determined based on a second model, or the second parameter is a preconfigured parameter.

24. The method according to any one of claims 21 to 23, wherein the symbol set corresponding to the first data signal is determined based on a third model, or the symbol set corresponding to the first data signal is a preset symbol set.

25. The method according to any one of claims 21 to 24, wherein the symbol set corresponding to the second data signal is determined based on a fourth model, or the symbol set corresponding to the second data signal is a preset symbol set.

26. The method according to any one of claims 20 to 25, wherein the first data signal and the second data signal have different first statistical distribution characteristics.

27. The method according to claim 26, wherein the first statistical distribution characteristic comprises one or more of: a modulation scheme, a coding scheme, and an information source type.

28. The method according to any one of claims 20 to 25, wherein the first data signal comprises multiple first signals, the multiple first signals correspond to multiple second devices, or the multiple first signals correspond to multiple transmission layers of the first device; wherein the second data signal comprises multiple second signals, the multiple second signals correspond to multiple second devices, or the multiple second signals correspond to multiple transmission layers of the first device;
the linear superposition of the first data signal and the second data signal is performed by:
linearly superposing a first signal and a second signal of a same layer; or
linearly superposing a first signal and a second signal for a same second device.

29. The method according to claim 28, wherein the multiple first signals have different second statistical distribution characteristics.

30. The method according to claim 29, wherein the second statistical distribution characteristic comprises one or more of: a modulation scheme, a coding scheme, an information source type, a first parameter, and a second parameter, wherein the first parameter is used for adjusting transmission energy of the first signal, and the second parameter is used for adjusting transmission energy of the second signal.

31. The method according to claim 19, wherein the target data signal is generated based on a nonlinear superposition of the first data signal and the second data signal.

32. The method according to claim 31, wherein the target data signal is generated by performing the nonlinear superposition on the first data signal and the second data signal by using a fifth model.

33. The method according to claim 32, wherein the fifth model is used for performing the nonlinear superposition on a processed data signal, and the processed data signal is obtained by a first processing operation on the first data signal and the second data signal.

34. The method according to claim 33, wherein the first processing operation comprises one or more of: a concatenation operation, a linear superposition, processing of a sixth model, and processing of a seventh model;
wherein the sixth model is used for processing the first data signal, and the seventh model is used for processing the second data signal.

35. The method according to claim 34, wherein the concatenation operation comprises one or more of:
concatenating a transmission resource occupied by the first data signal and a transmission resource occupied by the second data signal in time domain;
concatenating a transmission resource occupied by the first data signal and a transmission resource occupied by the second data signal in frequency domain;
concatenating based on an input channel of the first data signal and an input channel of the second data signal.

36. The method according to claim 34 or 35, wherein the first data signal comprises multiple first signals, the second data signal comprises multiple second signals, the sixth model is used for processing the multiple first signals, and the seventh model is used for processing the multiple second signals.

37. The method according to any one of claims 19 to 36, wherein the receiving, by the second device, the target data signal sent from the first device, comprises:
receiving, by the second device by using a first receiver, the target data signal, wherein the first receiver is used to recover the first data signal and the second data signal in the target data signal.

38. The method according to claim 37, wherein the first receiver is used to recover the first data signal and the second data signal based on first configuration information.

39. The method according to claim 38, wherein the method further comprises:
processing, by the first receiver in the second device, the target data signal based on a preconfigured parameter, to obtain a first processed signal;
processing, by the first receiver in the second device, the first processed signal based on the first configuration information, to obtain a second processed signal, wherein a dimension of the second processed signal is smaller than a dimension of the first processed signal; and
recovering, by the second device, the first data signal and the second data signal based on the second processed signal.

40. The method according to claim 38 or 39, wherein the first configuration information comprises one or more of: a number of transmission layers, a number of users for transmission, a transmission bandwidth, a first parameter, a second parameter, a third statistical distribution characteristic corresponding to the first data signal, and a fourth statistical distribution characteristic corresponding to the second data signal;
wherein the first parameter is used for adjusting transmission energy of the first data signal, and the second parameter is used for adjusting transmission energy of the second data signal.

41. The method according to claim 40, wherein the third statistical distribution characteristic and/or the fourth statistical distribution characteristic comprises one or more of: a modulation scheme, a coding scheme, and an information source type.

42. A communication device, wherein the communication device is a first device, comprising:
a sending unit, configured to send a target data signal to a second device, wherein the target data signal is generated based on a first data signal and a second data signal, a transmission resource occupied by the first data signal comprises a first resource, the first resource is also used for transmitting part or all of data signals in the second data signal, and the first resource comprises at least two of resources as follows: a time-domain resource, a frequency-domain resource, and a spatial-domain resource.

43. The communication device according to claim 42, wherein the target data signal is generated based on a linear superposition of the first data signal and the second data signal.

44. The communication device according to claim 43, wherein the linear superposition of the first data signal and the second data signal is performed based on one or more of:
a symbol set corresponding to the first data signal;
a symbol set corresponding to the second data signal;
a first parameter, the first parameter being used for adjusting transmission energy of the first data signal;
a second parameter, the second parameter being used for adjusting transmission energy of the second data signal.

45. The communication device according to claim 44, wherein the first parameter is determined based on a first model, or the first parameter is a preconfigured parameter.

46. The communication device according to claim 44 or 45, wherein the second parameter is determined based on a second model, or the second parameter is a preconfigured parameter.

47. The communication device according to any one of claims 44 to 46, wherein the symbol set corresponding to the first data signal is determined based on a third model, or the symbol set corresponding to the first data signal is a preset symbol set.

48. The communication device according to any one of claims 44 to 47, wherein the symbol set corresponding to the second data signal is determined based on a fourth model, or the symbol set corresponding to the second data signal is a preset symbol set.

49. The communication device according to any one of claims 43 to 48, wherein the first data signal and the second data signal have different first statistical distribution characteristics.

50. The communication device according to claim 49, wherein the first statistical distribution characteristic comprises one or more of: a modulation scheme, a coding scheme, and an information source type.

51. The communication device according to any one of claims 43 to 48, wherein the first data signal comprises multiple first signals, the multiple first signals correspond to multiple second devices, or the multiple first signals correspond to multiple transmission layers of the first device; wherein the second data signal comprises multiple second signals, the multiple second signals correspond to multiple second devices, or the multiple second signals correspond to multiple transmission layers of the first device;
the linear superposition of the first data signal and the second data signal is performed by:
linearly superposing a first signal and a second signal of a same layer; or
linearly superposing a first signal and a second signal for a same second device.

52. The communication device according to claim 51, wherein the multiple first signals have different second statistical distribution characteristics.

53. The communication device according to claim 52, wherein the second statistical distribution characteristic comprises one or more of: a modulation scheme, a coding scheme, an information source type, a first parameter, and a second parameter, wherein the first parameter is used for adjusting transmission energy of the first signal, and the second parameter is used for adjusting transmission energy of the second signal.

54. The communication device according to claim 42, wherein the target data signal is generated based on a nonlinear superposition of the first data signal and the second data signal.

55. The communication device according to claim 54, wherein the target data signal is generated by performing the nonlinear superposition on the first data signal and the second data signal by using a fifth model.

56. The communication device according to claim 55, wherein the fifth model is used for performing the nonlinear superposition on a processed data signal, and the processed data signal is obtained by a first processing operation on the first data signal and the second data signal.

57. The communication device according to claim 56, wherein the first processing operation comprises one or more of: a concatenation operation, a linear superposition, processing of a sixth model, and processing of a seventh model;
wherein the sixth model is used for processing the first data signal, and the seventh model is used for processing the second data signal.

58. The communication device according to claim 57, wherein the concatenation operation comprises one or more of:
concatenating a transmission resource occupied by the first data signal and a transmission resource occupied by the second data signal in time domain;
concatenating a transmission resource occupied by the first data signal and a transmission resource occupied by the second data signal in frequency domain;
concatenating based on an input channel of the first data signal and an input channel of the second data signal.

59. The communication device according to claim 57 or 58, wherein the first data signal comprises multiple first signals, the second data signal comprises multiple second signals, the sixth model is used for processing the multiple first signals, and the seventh model is used for processing the multiple second signals.

60. A communication device, wherein the communication device is a second device, comprising:
a receiving unit, configured to receive a target data signal sent from a first device, wherein the target data signal is generated based on a first data signal and a second data signal, a transmission resource occupied by the first data signal comprises a first resource, the first resource is also used for transmitting part or all of data signals in the second data signal, and the first resource comprises at least two of resources as follows: a time-domain resource, a frequency-domain resource, and a spatial-domain resource.

61. The communication device according to claim 60, wherein the target data signal is generated based on a linear superposition of the first data signal and the second data signal.

62. The communication device according to claim 61, wherein the linear superposition of the first data signal and the second data signal is performed based on one or more of:
a symbol set corresponding to the first data signal;
a symbol set corresponding to the second data signal;
a first parameter, the first parameter being used for adjusting transmission energy of the first data signal;
a second parameter, the second parameter being used for adjusting transmission energy of the second data signal.

63. The communication device according to claim 62, wherein the first parameter is determined based on a first model, or the first parameter is a preconfigured parameter.

64. The communication device according to claim 62 or 63, wherein the second parameter is determined based on a second model, or the second parameter is a preconfigured parameter.

65. The communication device according to any one of claims 62 to 64, wherein the symbol set corresponding to the first data signal is determined based on a third model, or the symbol set corresponding to the first data signal is a preset symbol set.

66. The communication device according to any one of claims 62 to 65, wherein the symbol set corresponding to the second data signal is determined based on a fourth model, or the symbol set corresponding to the second data signal is a preset symbol set.

67. The communication device according to any one of claims 62 to 66, wherein the first data signal and the second data signal have different first statistical distribution characteristics.

68. The communication device according to claim 67, wherein the first statistical distribution characteristic comprises one or more of: a modulation scheme, a coding scheme, and an information source type.

69. The communication device according to any one of claims 62 to 66, wherein the first data signal comprises multiple first signals, the multiple first signals correspond to multiple second devices, or the multiple first signals correspond to multiple transmission layers of the first device; wherein the second data signal comprises multiple second signals, the multiple second signals correspond to multiple second devices, or the multiple second signals correspond to multiple transmission layers of the first device;
the linear superposition of the first data signal and the second data signal is performed by:
linearly superposing a first signal and a second signal of a same layer; or
linearly superposing a first signal and a second signal for a same second device.

70. The communication device according to claim 69, wherein the multiple first signals have different second statistical distribution characteristics.

71. The communication device according to claim 70, wherein the second statistical distribution characteristic comprises one or more of: a modulation scheme, a coding scheme, an information source type, a first parameter, and a second parameter, wherein the first parameter is used for adjusting transmission energy of the first signal, and the second parameter is used for adjusting transmission energy of the second signal.

72. The communication device according to claim 60, wherein the target data signal is generated based on a nonlinear superposition of the first data signal and the second data signal.

73. The communication device according to claim 72, wherein the target data signal is generated by performing the nonlinear superposition on the first data signal and the second data signal by using a fifth model.

74. The communication device according to claim 73, wherein the fifth model is used for performing the nonlinear superposition on a processed data signal, and the processed data signal is obtained by a first processing operation on the first data signal and the second data signal.

75. The communication device according to claim 74, wherein the first processing operation comprises one or more of: a concatenation operation, a linear superposition, processing of a sixth model, and processing of a seventh model;
wherein the sixth model is used for processing the first data signal, and the seventh model is used for processing the second data signal.

76. The communication device according to claim 75, wherein the concatenation operation comprises one or more of:
concatenating a transmission resource occupied by the first data signal and a transmission resource occupied by the second data signal in time domain;
concatenating a transmission resource occupied by the first data signal and a transmission resource occupied by the second data signal in frequency domain;
concatenating based on an input channel of the first data signal and an input channel of the second data signal.

77. The communication device according to claim 75 or 76, wherein the first data signal comprises multiple first signals, the second data signal comprises multiple second signals, the sixth model is used for processing the multiple first signals, and the seventh model is used for processing the multiple second signals.

78. The communication device according to any one of claims 60 to 77, wherein the receiving unit is configured to:
receive the target data signal by using a first receiver, wherein the first receiver is used to recover the first data signal and the second data signal in the target data signal.

79. The communication device according to claim 78, wherein the first receiver is used to recover the first data signal and the second data signal based on first configuration information.

80. The communication device according to claim 79, wherein the communication device further comprises:
a processing unit, configured to process the target data signal based on a preconfigured parameter, to obtain a first processed signal, and process the first processed signal, to obtain a second processed signal, wherein a dimension of the second processed signal is smaller than a dimension of the first processed signal;
a recovery unit, configured to recover the first data signal and the second data signal based on the second processed signal.

81. The communication device according to claim 79 or 80, wherein the first configuration information comprises one or more of: a number of transmission layers, a number of users for transmission, a transmission bandwidth, a first parameter, a second parameter, and a third statistical distribution characteristic;
wherein the first parameter is used for adjusting transmission energy of the first data signal, and the second parameter is used for adjusting transmission energy of the second data signal.

82. The communication device according to claim 81, wherein the third statistical distribution characteristiccomprises one or more of: a modulation scheme, a coding scheme, and an information source type.

83. A communication device, wherein the communication device is a first device, comprising a memory, a processor, and a transceiver, wherein the memory is configured to store a program, the processor is configured to invoke the program in the memory, and the transceiver is configured to:
send a target data signal to a second device, wherein the target data signal is generated based on a first data signal and a second data signal, a transmission resource occupied by the first data signal comprises a first resource, the first resource is also used for transmitting part or all of data signals in the second data signal, and the first resource comprises at least two of resources as follows: a time-domain resource, a frequency-domain resource, and a spatial-domain resource.

84. The communication device according to claim 83, wherein the target data signal is generated based on a linear superposition of the first data signal and the second data signal.

85. The communication device according to claim 84, wherein the linear superposition of the first data signal and the second data signal is performed based on one or more of:
a symbol set corresponding to the first data signal;
a symbol set corresponding to the second data signal;
a first parameter, the first parameter being used for adjusting transmission energy of the first data signal;
a second parameter, the second parameter being used for adjusting transmission energy of the second data signal.

86. The communication device according to claim 85, wherein the first parameter is determined based on a first model, or the first parameter is a preconfigured parameter.

87. The communication device according to claim 85 or 86, wherein the second parameter is determined based on a second model, or the second parameter is a preconfigured parameter.

88. The communication device according to any one of claims 85 to 87, wherein the symbol set corresponding to the first data signal is determined based on a third model, or the symbol set corresponding to the first data signal is a preset symbol set.

89. The communication device according to any one of claims 85 to 88, wherein the symbol set corresponding to the second data signal is determined based on a fourth model, or the symbol set corresponding to the second data signal is a preset symbol set.

90. The communication device according to any one of claims 84 to 89, wherein the first data signal and the second data signal have different first statistical distribution characteristics.

91. The communication device according to claim 90, wherein the first statistical distribution characteristic comprises one or more of: a modulation scheme, a coding scheme, and an information source type.

92. The communication device according to any one of claims 84 to 91, wherein the first data signal comprises multiple first signals, the multiple first signals correspond to multiple second devices, or the multiple first signals correspond to multiple transmission layers of the first device; wherein the second data signal comprises multiple second signals, the multiple second signals correspond to multiple second devices, or the multiple second signals correspond to multiple transmission layers of the first device;
the linear superposition of the first data signal and the second data signal is performed by:
linearly superposing a first signal and a second signal of a same layer; or
linearly superposing a first signal and a second signal for a same second device.

93. The communication device according to claim 92, wherein the multiple first signals or the multiple second signals have different second statistical distribution characteristics.

94. The communication device according to claim 93, wherein the second statistical distribution characteristic comprises one or more of: a modulation scheme, a coding scheme, an information source type, a first parameter, and a second parameter, wherein the first parameter is used for adjusting transmission energy of the first signal, and the second parameter is used for adjusting transmission energy of the second signal.

95. The communication device according to claim 83, wherein the target data signal is generated based on a nonlinear superposition of the first data signal and the second data signal.

96. The communication device according to claim 95, wherein the target data signal is generated by performing the nonlinear superposition on the first data signal and the second data signal by using a fifth model.

97. The communication device according to claim 96, wherein the fifth model is used for performing the nonlinear superposition on a processed data signal, and the processed data signal is obtained by a first processing operation on the first data signal and the second data signal.

98. The communication device according to claim 97, wherein the first processing operation comprises one or more of: a concatenation operation, a linear superposition, processing of a sixth model, and processing of a seventh model;
wherein the sixth model is used for processing the first data signal, and the seventh model is used for processing the second data signal.

99. The communication device according to claim 98, wherein the concatenation operation comprises one or more of:
concatenating a transmission resource occupied by the first data signal and a transmission resource occupied by the second data signal in time domain;
concatenating a transmission resource occupied by the first data signal and a transmission resource occupied by the second data signal in frequency domain;
concatenating based on an input channel of the first data signal and an input channel of the second data signal.

100. The communication device according to claim 98 or 99, wherein the first data signal comprises multiple first signals, the second data signal comprises multiple second signals, the sixth model is used for processing the multiple first signals, and the seventh model is used for processing the multiple second signals.

101. A communication device, wherein the communication device is a second device, comprising a memory, a processor, and a transceiver, wherein the memory is configured to store a program, the processor is configured to invoke the program in the memory, and the transceiver is configured to:
receive a target data signal sent from a first device, wherein the target data signal is generated based on a first data signal and a second data signal, a transmission resource occupied by the first data signal comprises a first resource, the first resource is also used for transmitting part or all of data signals in the second data signal, and the first resource comprises at least two of resources as follows: a time-domain resource, a frequency-domain resource, and a spatial-domain resource.

102. The communication device according to claim 101, wherein the target data signal is generated based on a linear superposition of the first data signal and the second data signal.

103. The communication device according to claim 102, wherein the linear superposition of the first data signal and the second data signal is performed based on one or more of:
a symbol set corresponding to the first data signal;
a symbol set corresponding to the second data signal;
a first parameter, the first parameter being used for adjusting transmission energy of the first data signal;
a second parameter, the second parameter being used for adjusting transmission energy of the second data signal.

104. The communication device according to claim 103, wherein the first parameter is determined based on a first model, or the first parameter is a preconfigured parameter.

105. The communication device according to claim 103 or 104, wherein the second parameter is determined based on a second model, or the second parameter is a preconfigured parameter.

106. The communication device according to any one of claims 103 to 105, wherein the symbol set corresponding to the first data signal is determined based on a third model, or the symbol set corresponding to the first data signal is a preset symbol set.

107. The communication device according to any one of claims 103 to 106, wherein the symbol set corresponding to the second data signal is determined based on a fourth model, or the symbol set corresponding to the second data signal is a preset symbol set.

108. The communication device according to any one of claims 102 to 107, wherein the first data signal and the second data signal have different first statistical distribution characteristics.

109. The communication device according to claim 108, wherein the first statistical distribution characteristic comprises one or more of: a modulation scheme, a coding scheme, and an information source type.

110. The communication device according to any one of claims 102 to 107, wherein the first data signal comprises multiple first signals, the multiple first signals correspond to multiple second devices, or the multiple first signals correspond to multiple transmission layers of the first device; wherein the second data signal comprises multiple second signals, the multiple second signals correspond to multiple second devices, or the multiple second signals correspond to multiple transmission layers of the first device;
the linear superposition of the first data signal and the second data signal is performed by:
linearly superposing a first signal and a second signal of a same layer; or
linearly superposing a first signal and a second signal for a same second device.

111. The communication device according to claim 110, wherein the multiple first signals have different second statistical distribution characteristics.

112. The communication device according to claim 111, wherein the second statistical distribution characteristic comprises one or more of: a modulation scheme, a coding scheme, an information source type, a first parameter, and a second parameter, wherein the first parameter is used for adjusting transmission energy of the first signal, and the second parameter is used for adjusting transmission energy of the second signal.

113. The communication device according to claim 101, wherein the target data signal is generated based on a nonlinear superposition of the first data signal and the second data signal.

114. The communication device according to claim 113, wherein the target data signal is generated by performing the nonlinear superposition on the first data signal and the second data signal by using a fifth model.

115. The communication device according to claim 114, wherein the fifth model is used for performing the nonlinear superposition on a processed data signal, and the processed data signal is obtained by a first processing operation on the first data signal and the second data signal.

116. The communication device according to claim 115, wherein the first processing operation comprises one or more of: a concatenation operation, a linear superposition, processing of a sixth model, and processing of a seventh model;
wherein the sixth model is used for processing the first data signal, and the seventh model is used for processing the second data signal.

117. The communication device according to claim 116, wherein the concatenation operation comprises one or more of:
concatenating a transmission resource occupied by the first data signal and a transmission resource occupied by the second data signal in time domain;
concatenating a transmission resource occupied by the first data signal and a transmission resource occupied by the second data signal in frequency domain;
concatenating based on an input channel of the first data signal and an input channel of the second data signal.

118. The communication device according to claim 116 or 117, wherein the first data signal comprises multiple first signals, the second data signal comprises multiple second signals, the sixth model is used for processing the multiple first signals, and the seventh model is used for processing the multiple second signals.

119. The communication device according to any one of claims 101 to 118, wherein receiving, by the second device, the target data signal sent from the first device, comprises:
receiving, by the second device by using a first receiver, the target data signal, wherein the first receiver is used to recover the first data signal and the second data signal in the target data signal.

120. The communication device according to claim 119, wherein the first receiver is used to recover the first data signal and the second data signal based on first configuration information.

121. The communication device according to claim 120, wherein the processor is configured to:
process the target data signal based on a preconfigured parameter, to obtain a first processed signal;
process the first processed signal based on the first configuration information, to obtain a second processed signal, wherein a dimension of the second processed signal is smaller than a dimension of the first processed signal;
recover the first data signal and the second data signal based on the second processed signal.

122. The communication device according to claim 120 or 121, wherein the first configuration information comprises one or more of: a number of transmission layers, a number of users for transmission, a transmission bandwidth, a first parameter, a second parameter, a third statistical distribution characteristic corresponding to the first data signal, and a fourth statistical distribution characteristic corresponding to the second data signal;
wherein the first parameter is used for adjusting transmission energy of the first data signal, and the second parameter is used for adjusting transmission energy of the second data signal.

123. The communication device according to claim 122, wherein the third statistical distribution characteristic and/or the fourth statistical distribution characteristic comprises one or more of: a modulation scheme, a coding scheme, and an information source type.

124. An apparatus, comprising a processor, configured to invoke a program from a memory, to perform the method according to any one of claims 1 to 18.

125. An apparatus, comprising a processor, configured to invoke a program from a memory, to perform the method according to any one of claims 19 to 41.

126. A chip, comprising a processor, configured to invoke a program from a memory, to enable a device in which the chip is installed to perform the method according to any one of claims 1 to 18.

127. A chip, comprising a processor, configured to invoke a program from a memory, to enable a device in which the chip is installed to perform the method according to any one of claims 19 to 41.

128. A computer-readable storage medium, having a program stored thereon, wherein the program enables a computer to perform the method according to any one of claims 1 to 18.

129. A computer-readable storage medium, having a program stored thereon, wherein the program enables a computer to perform the method according to any one of claims 19 to 41.

130. A computer program product, comprising a program, wherein the program enables a computer to perform the method according to any one of claims 1 to 18.

131. A computer program product, comprising a program, wherein the program enables a computer to perform the method according to any one of claims 19 to 41.

132. A computer program, wherein the computer program enables a computer to perform the method according to any one of claims 1 to 18.

133. A computer program, wherein the computer program enables a computer to perform the method according to any one of claims 19 to 41.
